## Europäisches Patentamt
## European Patent Office
## Office européen des brevets

(11) Veröffentlichungsnummer: **0 345 474 B1**

(12)
# EUROPÄISCHE PATENTSCHRIFT

(45) Veröffentlichungstag der Patentschrift: **06.12.95**

(51) Int. Cl.6: **B29C 49/78**, B29C 49/04, B29C 47/92, B29C 47/22

(21) Anmeldenummer: **89108286.9**

(22) Anmeldetag: **09.05.89**

(54) **Verfahren und Vorrichtung zum Extrusionsblasformen eines Hohlkörpers.**

(30) Priorität: **12.05.88 DE 3816273**

(43) Veröffentlichungstag der Anmeldung:
**13.12.89 Patentblatt 89/50**

(45) Bekanntmachung des Hinweises auf die Patenterteilung:
**06.12.95 Patentblatt 95/49**

(84) Benannte Vertragsstaaten:
**AT BE CH DE ES FR GB IT LI NL**

(56) Entgegenhaltungen:
**EP-A- 0 026 828**
**EP-A- 0 058 297**
**EP-A- 0 062 788**
**DE-A- 2 544 171**
**GB-A- 2 178 361**

**MASCHINENMARKT, Band 79, Nr. 7, 1973, Seiten 118-120, Würzburg, DE; W. REITMAYR: "Extrusionsblasformen mit elektronischer Wanddickensteuerung steigert Wirtschaftlichkeit und Qualität"**

**PATENT ABSTRACTS OF JAPAN, Band 7, Nr. 124 (M-218)[1269], 28. Mai 1983; & JP-A-58 42 437 (ISHIKAWAJIMA HARIMA JUKOGYO K.K.)**

**11-03- 1983**

**PLASTICS ENGINEERING, Band 36, Nr. 4, April 1980, Seiten 23-28, Manchester, US; D.B. HUNKAR: "A blowmolder's guide to programmable controls: Part 1"**

(73) Patentinhaber: **FEUERHERM, Harald**
**Alfred-Delp-Str.1**
**D-53840 Troisdorf (DE)**

(72) Erfinder: **FEUERHERM, Harald**
**Alfred-Delp-Str.1**
**D-53840 Troisdorf (DE)**

(74) Vertreter: **Andrejewski, Walter, Dr. et al**
**Patentanwälte**
**Andrejewski, Honke & Partner**
**Postfach 10 02 54**
**D-45002 Essen (DE)**

**Beschreibung**

Die Erfindung bezieht sich auf ein Verfahren zum Extrusionsblasformen eines Hohlkörpers aus einem thermoplastischen Kunststoff sowie eine Vorrichtung dazu.

Zum Herstellen von Hohlkörpern aus thermoplastischem Kunststoff, beispielsweise Kanistern oder anderen Behältnissen, werden in der Praxis im wesentlichen zwei Arten von Maschinen eingesetzt. Die eine arbeitet mit einem kontinuierlich betriebenen Extruder, dem ein Strangpreßkopf nachgeschaltet ist, an dessen unterem Ende ein hohlstrangförmiger Vorformling austritt. Die andere Maschinenart arbeitet im Speicherkopfbetrieb. Mittels eines Massekolbens wird der in dem Speicherraum enthaltene Kunststoff zu jeweils einem hohlstrangförmigen Vorformling ausgepreßt. Das Auspressen erfolgt also diskontinuierlich. Da die herzustellenden Hohlkörper die unterschiedlichsten Formen aufweisen können, bei denen noch dazu bestimmte Wandungsbereiche erfahrungsgemäß in der Praxis besonders hohen mechanischen Beanspruchungen unterworfen sind, wird über die Länge des jeweiligen Vorformlings ein Wanddickenprogramm erstellt. Die Wanddickenprogrammierung wird zur Zeit mit konventionellen Regelgeräten durchgeführt. Es gibt sowohl Geräte mit Wanddickenprogrammierung in Längsrichtung, als auch solche, die ein Beeinflussen der Wanddickenverteilung in Umfangsrichtung des Vorformlings ermöglichen. Dazu wird z. B. im Strangpreßkopf oder im Speicherkopf der Durchflußkanalquerschnitt auf dem gesamten Umfang oder stellenweise verändert, so daß sich ein Vorformling ergibt, der über seine Länge und gegebenenfalls in Bereichen seines Umfanges unterschiedliche Wanddicken aufweist.

Man hat bereits erkannt, daß es wichtig ist, ein sicheres Einhalten der Wanddickenverteilung des Vorformlings zu erreichen. Dies ist dann umso wichtiger, wenn neben der Wanddickenverteilung in Längsrichtung noch mit einer unterschiedlichen Wanddickenverteilung in Umfangsrichtung des Vorformlings produziert werden soll. Das ist beispielsweise bei der Produktion von Kanistern der Fall. In diesen Fällen werden z.B. die Programmpunkte, die sich nach dem Ausrecken eines Vorformlings zu einem Kanister in der Blasform in den engen Bereichen zwischen der oberen Wandung und der unteren Wandung einerseits und den Seitenwandungen andererseits befinden, mit einer extrem hohen Wanddicke versehen, da durch das Wanddickenprogramm für die radiale Wanddickenregelung dieser Materialüberschuß in den Bereich höherer Reckung verlagert werden kann. Nur bei gleichzeitigem Einsatz einer partiellen bzw. radialen Wanddickensteuerung können diese Extrempunkte im vorgegebenen Programm gesteckt werden, weil dann dieses Material auch in Umfangsrichtung verlagert werden kann und es nicht zu Materialanhäufungen an ungewünschten Stellen, beispielsweise im Bereich der Formtrennnähte, kommt. Je extremer die Programmkurve in einzelnen Bereichen bzw. zu einzelnen Programmpunkten eingestellt werden muß, umso genauer muß das zu diesen Punkten gehörige Material, welches der größten Reckung unterworfen ist, auch tatsächlich an die richtige Stelle in der Blasform zu liegen kommen. Abweichungen von mehr als ± 1 %, bezogen auf die Höhe der Blasform, führen schon zu erheblichen Qualitätseinbußen. Beispielsweise ergibt sich ein Verzug im Hohlkörper, und es entstehen erheblich geringere Stauchwerte sowie auch sonstige Festigkeitseigenschaften des fertigen Hohlkörpers.

Es kommt hinzu, daß die Herstellungskosten der Hohlkörper zu etwa 50 % durch den Materialeinsatz bestimmt sind. Der vom Kunden bezahlte Materialeinsatz wird immer geringer und darf nicht die mechanischen Eigenschaften verschlechtern. Eine ausreichende Kontrolle der Hohlkörper, schon wegen der Produkthaftung, ist unerläßlich. Eine hohe Stückleistung bei zumutbarem Verzug ist erforderlich und durch Konstanthaltung vorher ermittelter Wanddicken gegeben. Da schlechtere mechanische Werte in der Regel nicht in Kauf genommen werden können, muß das Einsatzgewicht erhöht und damit mehr Verzug des Hohlkörpers oder eine Verringerung der Stückleistung erfolgen.

In der Praxis wird eine Reihe von Forderungen an den Hohlkörper gestellt. In der am Schluß angefügten Tabelle sind einmal die Kriterien aufgeführt und zum anderen die hauptsächlichen Maßnahmen, durch welche diese Kriterien beeinflußt werden können. Die in der Tabelle verwendeten Abkürzungen bedeuten: PWDS = partielle (radiale) Wanddickensteuerung, SFDR = statisch flexibler deformierbarer Ring.

Zur Optimierung eines Hohlkörpers nach den Kriterien gemäß dieser Tabelle, insbesondere zur Erzielung guter mechanischer Eigenschaften, benötigt ein Spezialist, je nach Schwierigkeit des Hohlkörpers, einen bis fünf Tage Einstellarbeit an der Maschine. Optimale Werte können dann auch nur bei extrem gesteckten Wanddickenprogrammkurven erreicht werden.

Die auftretenden Störfaktoren können zu sechs Gruppen zusammengefaßt werden, die folgende Fehler zur Folge haben:

a) Unterschiedliche Förderleistung des Extruders und damit unterschiedliche Vorformlingslänge. Die Folge ist, daß das Nettogewicht des Hohlkörpers konstant ist, jedoch sind die kritischen Punkte bzw. die kritischen Querschnittsbereiche innerhalb der Blasform verschoben.

2

EP 0 345 474 B1

b) Unterschiedliche Schwellung des Vorformlings und damit unterschiedliche Vorformlingslänge. Die Folge ist, daß das Nettogewicht des Hohlkörpers ungleich ist und daß die kritischen Punkte bzw. Querschnittsbereiche verschoben sind.

c) Unterschiedliche Vorformlings-Unterkante bewirkt trotz konstantem Nettogewicht des Hohlkörpers und konstant geregelter Vorformlingslänge am Meßpunkt, daß kein konstantes Brutto- oder Vorformlings-Gewicht vorhanden ist. Die Folge ist, daß das Nettogewicht des Hohlkörpers konstant ist, daß aber die kritischen Punkte bzw. Querschnittsbereiche verschoben sind.

d) Unterschiedliche Einformzeit bewirkt trotz konstanten Vorformlings-Gewichtes und konstanter Vorformlings-Länge infolge nicht konstanter Schrumpfung und/oder Durchhängung eine Verschiebung der Wanddickenverteilung zur Blasform.

e) Unterschiedliche Reckfreudigkeit infolge unterschiedlicher Kunststoffe, d.h. unterschiedlicher Viskositäten, Massetemperaturen usw., bewirkt bei extrem gesteckten Wanddickenpunkten eine Vergrößerung der Fehler beim Ausrecken.

f) Ein zu langes Ausregeln eines Fehlers, vor allem beim Anfahren der Maschine sowie bei Umstellung auf andere Gewichte, Materialien, Hohlkörpergrößen und -formen usw. führt zu einem langen Produktionsausfall.

Unter dem Begriff "Reckfreudigkeit" wird folgendes Materialverhalten verstanden. Es zeigt sich in der Praxis immer wieder, daß sich das Material unterschiedlich ausdehnt. Die Hauptursachen sind unterschiedliche Viskositätsverteilung, unterschiedliche Temperaturen, unterschiedliche Wanddicken im Vorformling bis hin zur Kerbwirkung und unterschiedliche Orientierung der Kunststoffmoleküle innerhalb der Kunststoffmasse, selbst wenn bei der Kunststoffherstellung und der weiteren Behandlung alle technischen Möglichkeiten ausgenutzt werden, um eine möglichst homogene Masse zu erreichen.

Um den nachfolgend erläuterten relevanten Stand der Technik richtig beurteilen zu können, müssen die oben aufgezeigten Fehlermöglichkeiten Berücksichtigung finden.

Aus der Zeitschrift "Maschinenmarkt" 1973, Heft 7, Seiten 118 bis 120, ist es bekannt, die Länge des Vorformlings durch Einstellen der Spaltweite der Austrittsöffnung des Düsenspaltes so gleichmäßig wie möglich zu halten. Bei Verwendung eines Speicherkopfes wird über den vorgegebenen Speicherhub das Volumen des Vorformlings konstant gehalten. Bleiben nun auch das Kunststoffmaterial, die Massetemperatur, die Schlauchausstoßzeit und der Massedruck konstant, dann bleibt auch das ausgestoßene Bruttogewicht des Hohlkörpers konstant. Durch die hauptsächlichen, weiter unten noch näher erläuterten Störfaktoren ergeben sich unterschiedliche Vorformlingslängen, die durch eine die Unterkante des Vorformlings erfassende Einrichtung und durch eine nachfolgende Regelung des Düsenaustrittsspaltes ausgeglichen werden sollen. Das Ziel ist immer, über die Vorformlingslänge die auf den Vorformling vorgegebene Wanddickenprogrammierung in die richtige Länge zur Blasform zu bringen. Infolge der Fehler c) bis e) kann der Praktiker dies jedoch nicht erreichen. Er verschleift das eingestellte optimale Wanddickenprogramm, einfacher ausgedrückt werden eventuelle Spitzen in der Programmierkurve stark abgerundet. Die Folge sind Wanddickenunterschiede und damit schlechtere mechanische Eigenschaften sowie Verzug des Hohlkörpers und meist auch ein zu hohes Einsatzgewicht.

Aus der EP-B-0 162 045 ist ein Verfahren zum Regeln der Wandstärke von hohlstrangförmigen Vorformlingen aus thermoplastischem Kunststoff nach einem vorgegebenen Programm bekannt, wobei die Lage der Vorformlinge zu der Blasform durch einen Meßgeber, vorzugsweise eine Fotozelle, kontrolliert wird und wobei anschließend die Vorformlinge in einer Blasform durch Innendruck zu jeweils einem Hohlkörper aufgeweitet werden, wobei schließlich die Lage jedes Vorformlings zu der Blasform in Abhängigkeit von mindestens einem vorbestimmten Querschnittsbereich des Vorformlings, vorzugsweise einem kritischen Bereich, gesteuert bzw. geregelt wird. Ferner ist hieraus bekannt, beim Ablauf des Wanddickenprogramms eine oder mehrere Markierungen an dem Vorformling anzubringen, die nach Erfassung durch einen Meßgeber die Einleitung von geeigneten Steuerungsmaßnahmen gestatten. Bei diesem Verfahren erfolgt die Steuerung bzw. Regelung ohne Rücksicht auf die jeweilige Gesamtlänge des Vorformlings. Es ist aber nicht möglich, gleichzeitig das Nettogewicht des Hohlkörpers konstant zu halten oder zu regeln.

Ferner ist aus der EO-A-0 026 828 eine Vorrichtung zum Beeinflussen des Gewichtes eines im unteren Extrusionsblasverfahren hergestellten Hohlkörpers aus thermoplastischem Kunststoff bekannt, wobei unter anderem das Gewicht des Hohlkörpers nach Verlassen der Blasform festgestellt und mit einem Sollwert verglichen und in Abhängigkeit vom Ergebnis des Vergleichs der Düsenspalt zur Regulierung des Volumens des den Vorformling bildenden Materials verstellbar ist. Ferner ist eine die Länge des Vorformlings erfassende Einrichtung vorhanden, mittels welcher ein Signal für die Steuerung der Bewegung der Blasformteile oder der Blasform ausgelöst wird. Schließlich ist eine Steuereinrichtung vorgesehen, mittels welcher die Zeit, in welcher ein Vorformling gebildet wird, möglichst konstant gehalten wird. Es wird unter anderem auch hier angestrebt, daß bei Anwendung des Wanddickenprogramms die programmierte Wanddickenverteilung auf dem Vorformling immer die richtige Position relativ zur Blasform einnimmt. In der Praxis hat sich jedoch gezeigt, daß mit der bekannten Vorrichtung nicht die kritischen Punkte des Wanddickenprogramms und damit die kritischen Querschnittsbereiche in die richtige Lage zur Blasform gebracht werden können. Die Gründe sind folgende: Man versucht, das Nettogewicht konstant zu regeln. Bei einer festgelegten Position des die Länge erfassenden Vorformlings ist dies aber bei einer unterschiedlichen Vorformlingsunterkante nicht möglich (Fehler c)). Auch die Anordnung des Meßgebers im günstigsten Mittel zwischen einer konkaven oder konvexen Unterkante brachte nicht den erforderlichen Mittelwert der Länge des Vorformlings, der aber erforderlich wäre, um das Vorformlings-Gewicht konstant zu halten. Außer dieser unterschiedlichen Randform am unteren Ende des Vorformlings ergeben sich zusätzliche Fehlerquellen, z. B. ein unsauberer Schnitt, Erschütterungen an der Maschine und ein unregelmäßig austretender schiefer Schlauchlauf. Infolge dieser Fehlerquellen kommt es zu einer Verschiebung der Wanddickenpunkte am Hohlkörper. Des weiteren ist die Zeit zwischen der Erfassung der Vorformlingslänge und der Fixierung des Vorformlings durch die Blasform nicht konstant, d. h. es ergibt sich keine gleiche Einformzeit (Fehler d)). Ferner ergibt sich durch die Zeitdifferenz T2-T1 Fehler d) und dadurch, auch bei eingelaufener Maschine, infolge Schrumpfung und/oder Durchhängung Verschiebungen der Wanddickenpunkte zur Blasform. Weiter ist zu berücksichtigen, daß der Vorformling beim Aufweiten infolge unterschiedlicher Massetemperaturen und Viskosität eine unterschiedliche Reckfreudigkeit besitzt, so daß dadurch eine unterschiedliche Verreckung der kritischen Punkte bzw. kritischen Querschnittsbereiche erfolgt. Beim Einsatz der erforderlichen partiellen Wanddickensteuerung vergrößern sich diese vorgenannten Verlagerungen noch zusätzlich (Fehler e)). Des weiteren dauert die Optimierung bei der Einstellung der Maschine, die nur von Spezialisten durchgeführt werden kann, und das Ausregeln besonders in der Anfahrphase bei der bekannten Vorrichtung zu lange, denn durch die Überlagerung von drei Regelkreisen ist diese Vorrichtung nur für das Ausregeln in der Produktion geeignet. In der Anfahrphase, besonders am Montagmorgen, bis zur Erreichung einer Angleichung der Temperatur der den Flußkanal begrenzenden Bauteile, bei Bewegungen der Blasform usw., entstehen erhebliche Abweichungen von den Sollwerten. Schließlich ergeben sich Abweichungen durch Änderungen in der Optimierungsphase und beim Umstellen auf andere Gewichte, Materialien, Hohlkörpergrößen usw. (Fehler f)).

Aus DE-Z: S. Dormeier, "Ein Beitrag zur Automatisierung des Extrusionsblasformens", Inst. für Kunststoffverarbeitung, TH Aachen, 1977, ist es bekannt, als Maß für die Vorformlingslänge die Butzenlänge bzw. das Butzengewicht zu definieren. Es geht hauptsächlich darum, ein Minimalbutzengewicht zu erreichen, und es wird dazu vorgeschlagen, neben der Vorformlingslänge auch die Extrusionsgeschwindigkeit und die Schneckendrehzahl zu regeln. Ferner wird vorgeschlagen, anstelle der bekannten zwei unter der Blasform befindlichen Lichtschranken ein kontinuierliches Meßverfahren zur Messung der Butzenlänge einzusetzen. Fener wird die Butzenlänge bzw. das Butzengewicht als ein Maß für die optimale Verarbeitungslänge angesehen. Das Ziel ist in jedem Falle, eine konstante Butzenlänge und auch eine konstante Vorformlingslänge zu erreichen. Die Regelung erfolgt über Lichtschranken, die unter anderm auch zur Messung der Extrusionsgeschwindigkeit dienen.

Aus "Kunststoffe 70" (1980) 9, Seiten 522 bis 524, ist eine Einrichtung zur Gewichtsregelung bekannt. Diese Einrichtung arbeitet in der Weise, daß die von der Blasformanlage gefertigten Blasteile zuerst zu einer Dichtigkeitsprüfeinheit gelangen. Die hier als fehlerfrei erkannten Blasteile gelangen zu einer digital arbeitenden Waage zur Erfassung des Blasteilgewichts für die Gewichtsregelung. Der Regelkreis für die Gewichtsregelung besteht neben dieser Waage aus einer mikroprozessorgesteuerten Regeleinheit und einem Motorpotentiometer für die automatische Spaltverstellung im Wanddickenprogrammierer als Stellglied. An der Waage befindet sich zusätzlich eine Fotozelle, die zur Freigabe des Wägewerts an den Rechner eingesetzt wird.

Ferner sei die DE-A-3 114 371 erwähnt. Dieser Druckschrift kann der Fachmann entnehmen, mit welchen Problemen der Praktiker zu kämpfen hat. Rückstellkräfte oder eine Durchhängung des Vorformlings erschweren zusätzlich die Zuordnung des Wanddickenprogramms zur Blasform. Es wird deshalb aufgrund des vorhandenen Betriebszustands und der Materialdaten eine Relation von gemessener Austrittslänge und einer effektiven Vorformlingslänge ermittelt und in eine Vergleichseinrichtung eingegeben. Dieser zusätzliche Aufwand wird in Kauf genommen, um eine präzisere Zuordnung der Wanddickenprogrammierung auf dem Vorformling zur Blasform zu erreichen. Es ergeben sich zusätzliche Nachteile, nämlich es erfolgt keine Regelung des Nettogewichts des Hohlkörpers. Außerdem ergeben sich die Fehler d) bis e).

Die Fehlerquellen bei Steuerungen über die Vorformlingsunterkante sind also im wesentlichen folgende, und zwar sowohl bei kontinuierlicher Extrusion als auch bei Speicherkopfbetrieb: unsauberer Schnitt oder unterschiedlicher Abriß des Vorformlings unter dem Kopf, unterschiedliche Stützluftmenge und Stützluftdruck, Erschütterungen der Maschine, schiefer Schlauchlauf, Rückdeformation bzw. Schrumpfung einerseits und aufgrund des Eigengewichts Durchhängung des Schlauches in unterschiedlichen Zeiten zwischen

4

Fertigstellung des Vorformlings und dem Schließen der Blasform und Vorextrusion im Speicherkopfbetrieb.

Die Erfindung schließt an den Stand der Technik aus EP-A-0 026 828 an. Aus dieser Druckschrift ist ein Verfahren zum Extrusionsblasformen mit den im Oberbegriff der Ansprüche 1 und 18 angegebenen Merkmale bekannt. Bei der Abfassung des Anspruches 10 geht die Erfindung aus von dem Stand der Technik aus DE-A-3 114 371, welcher sich auf ein Verfahren bezieht, welches mit einem Strangpreßkopf mit Speicherkopfbetrieb arbeitet.

Der Erfindung liegt die Aufgabe zugrunde, die bekannten Verfahren so weiter auszubilden, daß sowohl eine richtige Lage des Vorformlings in bezug auf kritische Querschnittsbereiche zur Blasform als auch ein richtiges Gewicht des herzustellenden Hohlkörpers erreichbar ist.

Gegenstand der Erfindung und Lösung dieser Aufgabe sind Verfahren gemäß den Ansprüchen 1, 10 und 18. Vorteilhafte Ausgestaltungen der erfindungsgemäßen Verfahren ergeben sich aus den Unteransprüchen 2 bis 9, 11 bis 17 und 19 bis 20. Die Erfindung bezieht sich ferner auf eine Vorrichtung gemäß den Ansprüchen 21 bis 26 zur Durchführung der erfindungsgemäßen Verfahren.

In der Zeichnung sind Ausführungsbeispiele der Erfindung schematisch dargestellt, und zwar zeigen

Figur 1 eine Gesamtanlage mit einem kontinuierlich arbeitenden Strangpreßkopf sowie einer zugehörigen Steuer- und Regeleinrichtung,

Figur 2 eine anders gestaltete Gesamtanlage mit einem Strangpreßkopf, welcher einen Speicherkopf aufweist,

Figur 3 einen Horizontalschnitt einer konstruktiven Einzelheit aus Figur 1 bzw. Figur 2,

Figuren 4 bis 6 Schemazeichnungen zur Veranschaulichung von Regel- bzw. Steuerungsmaßnahmen

Figur 7 eine Darstellung einer hälftigen Kontur eines Kanisters mit einer dazugehörigen Programmkurve,

Figur 8 Skizzen zur Veranschaulichung von Fehlerquellen am unteren Ende des Vorformlings,

Figur 9 Skizzen zur Veranschaulichung weiterer Fehlerquellen mittels Gewichtsabschnittsmessungen und

Figur 10 eine weitere Schemazeichnung zur Veranschaulichung von Regel- bzw. Steuerungsmaßnahmen.

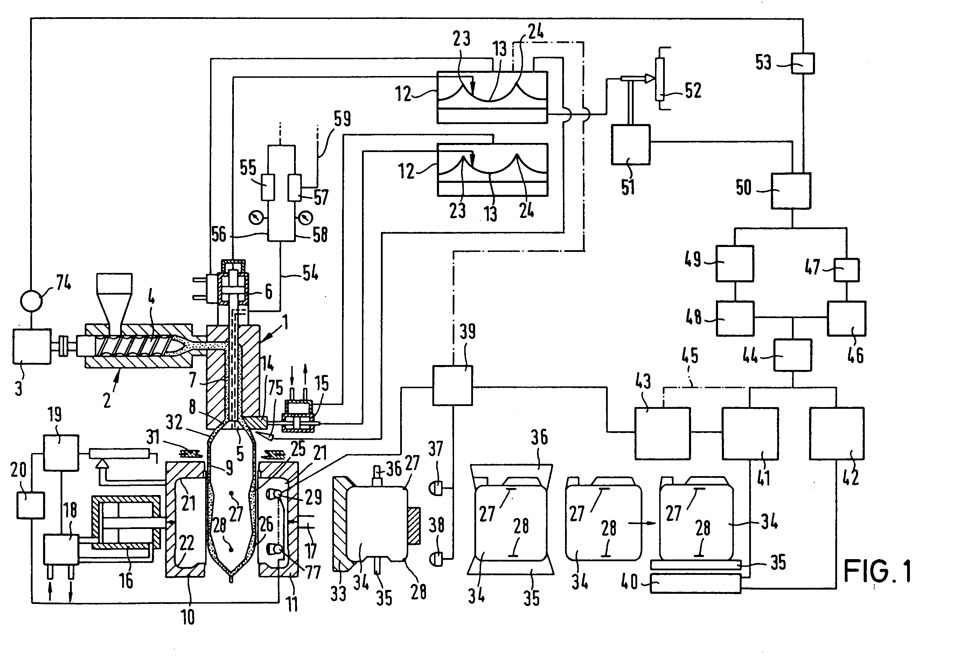

Figur 1 zeigt schematisch eine Gesamtanlage mit einem kontinuierlich arbeitenden Strangpreßkopf 1, an dessen oberem Ende ein Extruder 2 mit einer von einem Motor 3 angetriebenen Schnecke 4 angeschlossen ist. Im Innern des Strangpreßkopfes ist ein vertikal verlaufender und in der Höhe einstellbarer Dorn 5 angeordnet. Die Verstellung erfolgt durch eine Vorrichtung 6 an dem oberen Stirnende des Strangpreßkopfes, beispielsweise durch eine hydraulische Vorrichtung. Zwischen dem Strangpreßkopf 1 und dem Dorn 5 ist ein zylindrischer Raum 7 vorhanden, der von dem Extruder 2 mit thermoplastischem Kunststoff gefüllt wird, der in diesem zylindrischen Raum zu einem Hohlstrang ausgeformt wird. Der zylindrische Raum 7 mündet am unteren Ende in einem Düsenspalt 8, an dem jeweils ein Vorformling 9 austritt, der in den Bereich einer darunter befindlichen geteilten Blasform mit den Blasformteilen 10 und 11 gelangt. Von einer mikroprozessorgesteuerten Programmiereinrichtung 12 wird der Dorn 5, entsprechend einer Programmkurve 13, in der Höhe verstellt, so daß der Querschnitt des Düsenspaltes 8 größer oder kleiner wird und dementsprechend die Dicke der Wandung des Vorformlings 9 vergrößert oder verkleinert wird. Zur partiellen Wanddickensteuerung kann zusätzlich eine vereinfacht gezeichnete Vorrichtung 14 vorgesehen sein, die von einer Verstellvorrichtung 15 betätigt wird, so daß auch eine Änderung der Wanddicke auf dem Umfang des Vorformlings vorgenommen werden kann, und zwar ebenfalls gesteuert von der Programmiereinrichtung 12, jedoch mit einer abweichenden Programmkurve.

Die beiden Blasformhälften 10 und 11 werden durch eine pneumatische oder hydraulische Vorrichtung 16 betätigt. In Figur 1 ist nur die linke Betätigungsvorrichtung gezeichnet, jedoch erhält auch die rechte Blasform 11 über den Ansatz 17 eine entsprechende Betätigungsvorrichtung. Die Betätigungsvorrichtungen stehen in Verbindung mit einer nachfolgend noch im einzelnen beschriebenen Steuerungseinrichtung, und zwar unmittelbar mit einem Servoventil 18, einem Vergleichs- und Regelglied 19 und einem Zeitglied 20.

Das vorliegende Ausführungsbeispiel bezieht sich auf die Herstellung von Kanistern, wobei ein besonders kritischer Bereich an der Schulter des Kanisters entsprechend der Stelle 21 in der Blasform und auf mindestens einem Teil des Umfangs zu dieser Stelle vorhanden ist. Ein weiterer kritischer Bereich befindet sich am Rand des Bodens des Hohlkörpers entsprechend der Stelle 22 in der Blasform, wiederum mindestens über einen Teil des Umfangs gesehen. Bei diesem Ausführungsbeispiel erhält die Programmkurve 13 zwei besonders steil gesteckte Spitzen 23 und 24, die jedoch durch die Interpolation der Programmkurve automatisch abgerundet sind. Entsprechend diesen Spitzen erhält der Vorformling zwei Bereiche 25 und 26 mit besonders großen Wanddicken.

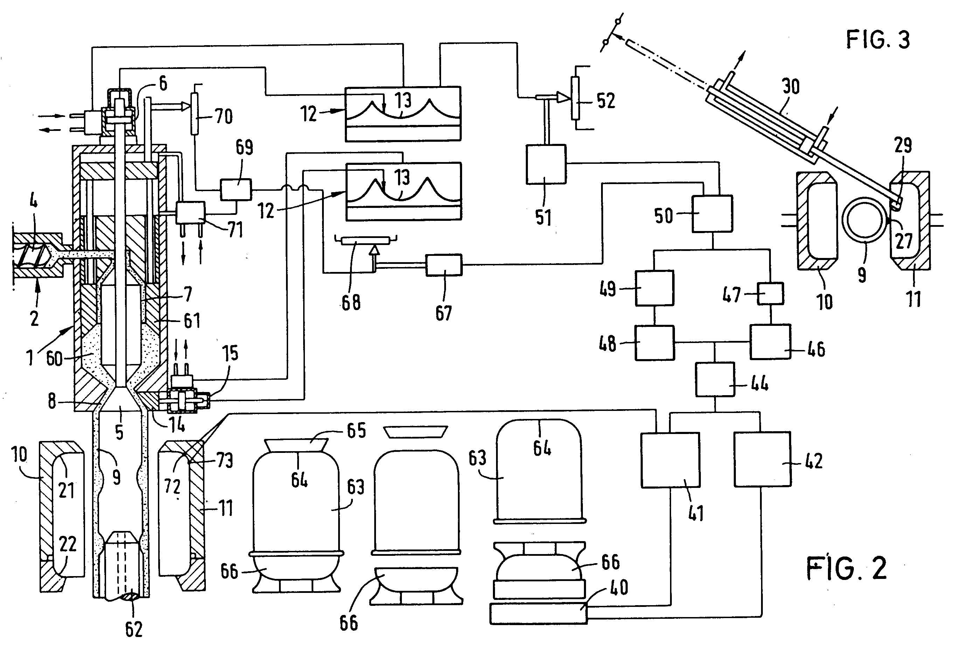

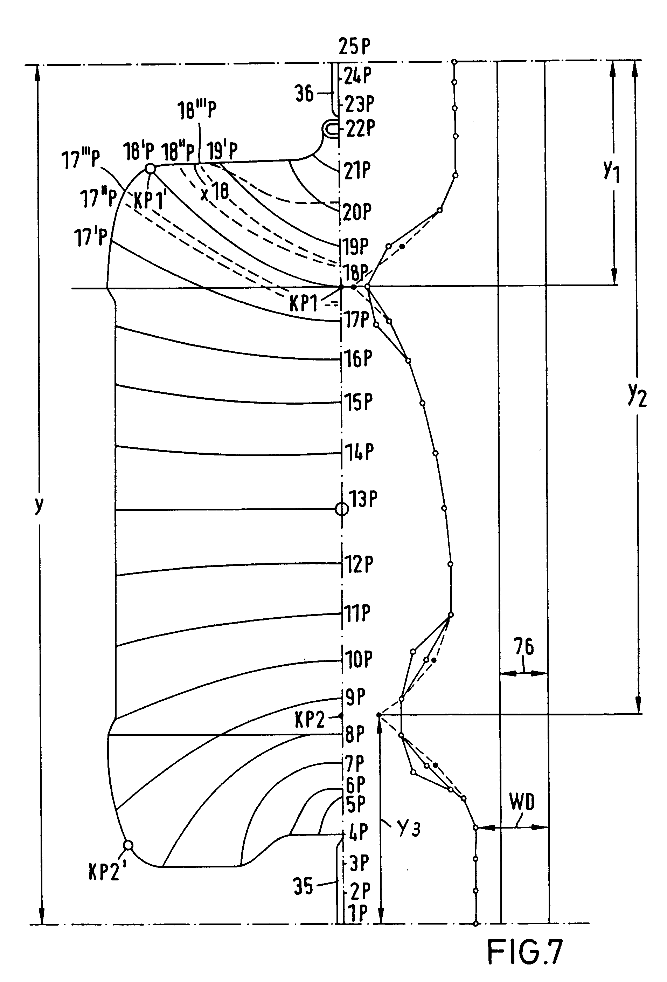

Zugehörig zu diesen beiden kritischen Bereichen werden vorteilhafterweise außen an dem Vorformling 9 zwei Markierungen 27 und 28 durch eine Markierungsvorrichtung 75 angebracht, die z.B. zur Kontrolle durch das Bedienungspersonal bezüglich der Lage der kritischen Punkte verwendet werden. Ist die Lage nicht mehr im Toleranzbereich und die Gewichtskontrollen in Ordnung, wird ein neues unteres Soll-Butzengewicht eingestellt. Ebenso ist es möglich, daß diese Markierungen vor dem Schließen der Blasform durch einen Meßgeber 29, ggfs. 77, erfaßt werden. Wie Figur 3 veranschaulicht, kann der Meßgeber 29 bzw. 77 durch eine pneumatisch oder hydraulisch arbeitende Vorrichtung 30, die nach Art eines Teleskops arbeitet, in die Blasform eingefahren und vor dem Schließen der Blasform wieder herausgezogen werden. Die Markierungen 27, 28 können, wie in Figur 1 dargestellt, außen im Bereich der Teilungsebene der Blasform angebracht werden, und/oder nach Figur 3 um 90° versetzt in einer Ebene, die senkrecht zu der Teilungsebene verläuft. Dies hängt von der Gestaltung des Hohlkörpers und/oder der Blasform ab. Das Zeitglied 20 kann eine doppelte Funktion haben, nämlich einmal die Impulse für das Ein- und Ausfahren des Meßgebers 29 ausgeben und zum anderen kann es eine Zeitvorgabe machen, entsprechend der Zeit, die zum Schließen der Blasform erforderlich ist und in der sich der Vorformling noch weiter nach unten bewegt. Die Erfassung einer entsprechenden Zeitdifferenz ist erforderlich, wenn der Vorformling in die gewünschte richtige Lage zur Blasform gelangen soll. Wird das Schließen der Blasform von der Erfassung der Markierung 27 abhängig gemacht, sollte zweckmäßigerweise die Zeit von der Erfassung der Markierung bis zur Fixierung des Vorformlings durch die Blasform konstant gehalten werden, d.h. gleicher Schrumpf bzw. Durchhängung. Hierzu ist es erforderlich, den Meßgeber 29 so in der Höhe einzustellen, ggfs. zu verstellen, daß nach Erfassung der Markierung 27 durch den Meßgeber 29 der Maschinenablauf direkt oder über ein Zeitglied verzögert wird und der Vorformling so erfaßt wird, daß der kritische Punkt KP1'(Figur 7) mit der Markierung übereinstimmt. Diese Bewegung kann geregelt sein, um auch in der Anfahrphase, in der die Geschwindigkeiten noch langsam sind, eine Konstanz zu erreichen. Nach einer weiteren vorteilhaften Ausgestaltung der Erfindung kann die Markierung auch z.B. in der Maske verglichen werden und ggfs. der Meßgeber 29 in der Höhe verstellt werden, was auch automatisch vorgenommen werden kann. In diesem Zusammenhang kann das Zeitglied 20 in Verbindung mit der im Beispiel geregelten Blasformschließbewegung benutzt werden.

Nach dem Schließen der Blasform wird der Vorformling 9 durch eine Trennvorrichtung 31 von dem nachfolgenden Hohlstrang 32 abgetrennt. Direkt anschließend wird die Blasform zu einer Blasstation gefördert, in der eine nicht gezeichnete Blasvorrichtung den Vorformling aufbläst und an die Wandung der Blasform aufweitet.Nach dem Wiederöffnen der Blasform wird der Hohlkörper in einer Maske 33 nach außen abgeführt. In diesem Zustand besitzt der eigentliche Hohlkörper 34 einen unteren Butzen 35 und einen oberen Butzen 36, die während des Abquetschvorgangs der Blasform entstanden sind. Vorteilhafterweise wird nun der Hohlkörper 34, ggfs. nach Schwenkung um 90° um eine Vertikale, Meßgebern 37 und 38 zugeordnet, die genau erfassen, ob die Markierungen 27 und 28 an der richtigen Stelle liegen oder ob und wie viel Abweichungen vorhanden sind. Die Meßwerte der Meßgeber 37 und 38 und des Meßgebers 29 werden einem Vergleichs- und Regelglied 39 der Steuerungseinrichtung zugeführt.

Der untere Butzen 35 und der obere Butzen 36 werden nun von dem eigentlichen Hohlkörper 34 abgetrennt. Sodann wird der untere Butzen 35 zweckmäßigerweise flach auf eine Waage 40 gebracht und dort das Gewicht gemessen. Einzelne ausgewählte untere Butzen können von Hand auf die Waage aufgebracht werden. Stattdessen ist es aber zweckmäßiger, sämtliche unteren Butzen nacheinander vollautomatisch auf die Waage zu bringen. Zusätzlich bzw. abwechselnd mit den unteren Butzen kann auch das Nettogewicht des Hohlkörpers 34 gemessen werden. Zu diesem Zweck kann auch eine zweite Waage vorgesehen sein, so daß die erste Waage ausschließlich zum Wiegen des Gewichtes der unteren Butzen und die zweite Waage für das Nettogewicht der Hohlkörper 34 bestimmt sind. Die Gewichtswerte der unteren Butzen werden einem Regelglied 41 der Regeleinrichtung zugeführt, während die Nettogewichtswerte der Hohlkörper einem weiteren Regelglied 42 eingegeben werden. Von dem Vergleichs- und Regelglied 39 werden die Meßwerte bezüglich der Markierungen 27, 28 einem Abstandsglied 43 aufgegeben, in welchem im wesentlichen der nachfolgend noch näher erläuterte Abstand $y2 - y1$ ausgewertet wird. Die Glieder 41 bis 43 sind an einer Additionsstufe 44 angeschlossen, die aber nur wirksam wird, wenn das Vergleichsgewicht aus mehreren Einzelgewichten besteht. Normalerweise ist das Abstandsglied 43 an das Regelglied 41 angeschlossen. Es kann aber auch, wie durch die strichpunktierte Linie 45 angedeutet ist, unter Umgehung des Regelglieds 41 direkt an die Additionsstufe 44 angeschlossen sein.

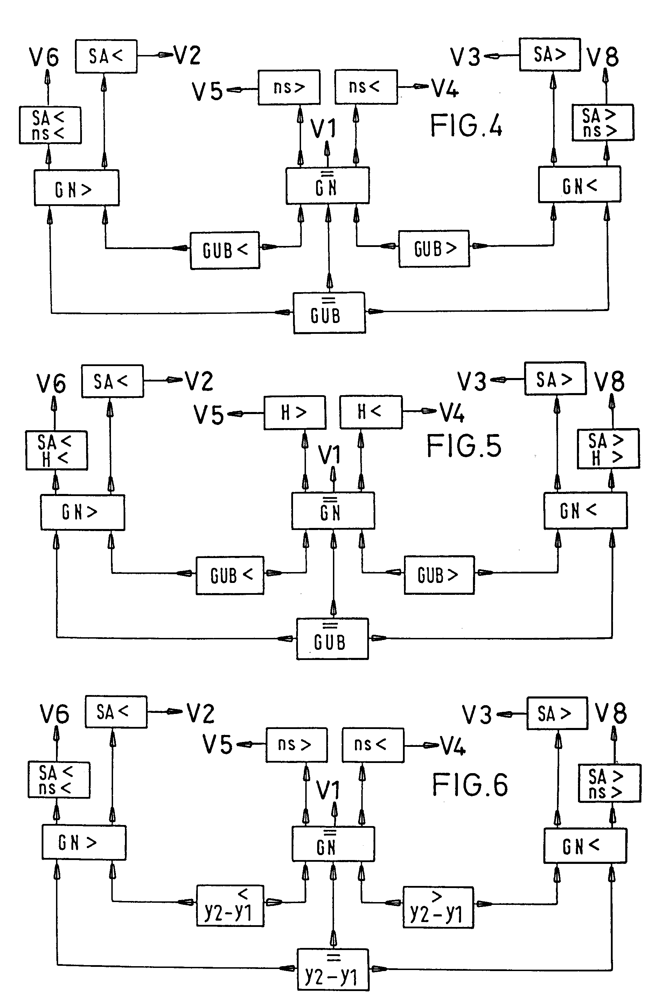

Die Regeleinrichtung hat nun im Anschluß an die Additionsstufe zwei Abzweigungen. Während der Anfahrphase des Strangpreßkopfes wird die rechte Abzweigung wirksam mit einem Stellglied 46 und einem Zeitglied 47, welches bewirkt, daß in der Anfahrphase sofort entsprechend eventuellen Gewichtsunterschieden nachgeregelt wird und das Umschalten auf die Produktionsphase nach einer vorgegebenen durch das Zeitglied 47 bestimmten Zeit erfolgen kann. Es ist jedoch auch möglich, nach anderen Kriterien auf die Produktionsphase umzuschalten, z.B. wenn die Abweichungen vom Sollwert eine bestimmte Größenordnung erreicht haben. Nach der Anfahrphase wird das Produktionsglied 48 mit einer anschließenden Tendenzstufe 49 der anderen Abzweigung wirksam. Über eine Vergleichs- und Regelstufe 50 (Figur 4), die noch im einzelnen beschrieben wird, werden eventuelle Korrekturwerte für den Düsenspalt 8 einem Stellmotor 51 aufgegeben, der ein Potentiometer 52 betätigt, so daß, ohne in die eigentliche Programmiereinrichtung 12 eingreifen zu müssen, hierüber die Verstellung des Dorns 5 und damit des Düsenspaltes 8 erfolgen kann. Ermittelt die Vergleichs- und Regelstufe 50 eine Korrektur der Schneckendrehzahl ns, so wird die Sperrstufe 53 geöffnet und die Drehzahl über den Stellmotor 74 geändert. Selbstverständlich ist es auch möglich, auf den Komfort der Markierungseinrichtung 75 ganz zu verzichten und die Kontrollen, ob die Kontrollpunkte an der richtigen Stelle liegen, durch Sicht-, Druck-, Schnitt- und Wanddicken-Kontrollen durchzuführen. Ebenso ist es möglich, durch extreme Verstellung eines gezielten Wanddickenpunktes die Lage zu kontrollieren oder sogar die sich automatisch einstellenden Markierungen infolge der extremen Wanddickenveränderungen an den kritischen Punkten dafür zu verwenden. Alle diese Kontrollen werden zu dem Zweck durchgeführt, bei Abweichungen in der Lage trotz konstanter Gewichtsabschnittskontrollen ggfs. ein neues unteres Soll-Butzengewicht in das Regelglied 41 vorzugeben. Die Eingabe kann von Hand erfolgen.

Figur 1 veranschaulicht noch eine Vorrichtung zur Zuleitung einer Stützluft über die Richtung 54 zum oberen Ende des Strangpreßkopfes, und zwar kann die Stützluft als konstante Dauerluft durch Einstellen von Druck und Menge zugeführt werden. Die Zuleitung erfolgt über die Ventilvorrichtung 55 und Leitung 56. Zusätzlich kann der konstanten Dauerluft eine zeitlich einstellbare und/oder geregelte Stützluft über die Ventilvorrichtung 57 und Leitung 58 überlagert werden. Die Veränderung erfolgt mittels der Ventilvorrichtungen 55 und 57. Die Dauer der geregelten Stützluft wird elektrisch über Leitung 59 bestimmt. über diese Anordnung der Stützluftsteuerung oder -regelung ist man in der Lage, bei geschlossenem Vorformling die Gesamtlänge und damit den Abstand z.B. zwischen den zwei Markierungen zu steuern und/oder zu regeln. Gleichzeitig verändert sich auch der Durchmesser des Vorformlings. Bei wechselnden Gewichten in der Produktion und damit veränderten Zykluszeiten der Maschine, d.h. veränderte Luftmengen im Vorformling, könnte eine Anpassung z.B. nach Erfassung der Markierungen erfolgen.

Figur 2 zeigt ein weiteres Ausführungsbeispiel einer erfindungsgemäßen Anlage. Für gleiche oder gleichwirkende Teile sind die gleichen Bezugszeichen wie in Figur 1 verwendet worden. In diesem Falle ist jedoch der Strangpreßkopf 1 als Speicherkopf mit einem Speicherraum 60 und einem vertikal verstellbaren Hohlkolben 61 ausgestattet. Im unteren Bereich der Blasform ist schematisch ein Zuführungsrohr 62 für die Zuführung der Blasluft eingezeichnet. In diesem Ausführungsbeispiel bestehen die Hohlkörper aus einseitig offenen Behältern, die mit dem Boden 64 nach oben geformt sind, so daß der obere Butzen 65 vom Behälterboden abgetrennt wird. Der untere Butzen 66, der ebenfalls abgetrennt wird, wird in der Fachsprache auch als Dom bezeichnet. Dieser untere Butzen 66 bzw. Dom wird wieder, wie oben beschrieben, der Waage 40 zugeführt. In der Praxis wird für jeden verschiedenen Hohlkörper eine optimale Wanddicken-Programmierung meistens von Spezialisten durchgeführt. Alle Maschinen- und Produktionsdaten werden erfaßt. Das Ziel der Erfindung ist es, diese schon einmal optimierte Wanddicken-Verteilung über die volle Produktionszeit und auch nach einem erneuten Produktionsbeginn konstant zu halten. Die Figur 5 zeigt, wie die Vergleichs- und Regelstufe arbeitet. Da bei konstantem Speicherhub, gleiches spezifisches Gewicht des plastischen Kunststoffes und gleiche Ausstoßzeit vorausgesetzt, auch ein konstantes Bruttogewicht des Hohlkörpers ausgestoßen wird, ist es meistens schon ausreichend, nur das untere Butzengewicht oder das Nettogewicht konstant zu halten. Dieses wird durch Regelung des Dusenspaltes 8 durchgeführt. Die Regelung über das Nettogewicht wird bevorzugt, wenn z.B. mit einer Vorextrusion produziert werden muß. Eine Vorextrusion liegt vor, wenn der Düsenspalt nicht weit genug geschlossen ist und somit schon während der Speicherbefüllung Kunststoffmaterial aus dem Düsenspalt austritt, bevor der eigentliche Vorformling ausgestoßen wird.

Verändert sich durch eine andere Massetemperatur, einen anderen Massedruck oder durch Kunststoffmaterial-Daten das spezifische Gewicht oder die Ausstoßzeit der Fördermenge, wird dieses bei konstantem unterem Butzengewicht durch den Vergleich mit dem Nettogewicht des Hohlkörpers 63 erkannt und über den Speicherhub ausgeregelt. Hierzu ist die Vergleichs- und Regeleinrichtung 50 an einen Stellmotor 67 und ein Potentiometer 68 angeschlossen und dieses steht in Verbindung mit einem Vergleichs- und Regelglied 69, einem weiteren Potentiometer 70 und einem Servoventil 71, so daß in diesem Falle als Maß der Gewichtsänderungen des Nettogewichtes der Hohlkolben 61 geregelt wird. Es ist auch möglich, die Veränderung des spezifischen Gewichtes in Abhängigkeit der Material-, Temperatur- und Druckwerte in die Vergleichs- und Regeleinheit 50 einzuprogrammieren. Zur Kontrolle der Lage der kritischen Punkte können wieder die schon beschriebenen Möglichkeiten herangezogen werden. Als weitere automatische Kontrolle könnte vorteilhafterweise eine Wanddickenmessung 72, 73 des Hohlkörpers in der Blasform 11 verwendet werden. Es empfiehlt sich, hierfür Ultraschall-Meßgeber vorzusehen.

Die Blockschaltbilder in den Figuren 4, 5 und 6 veranschaulichen die Wirkungsweise der Vergleichs- und Regelstufe 50. Darin bedeuten:

GUB = Gewicht des unteren Butzens,
GN = Nettogewicht des Hohlkörpers,

ns       = Schneckendrehzahl,

SA       = Düsenspalt,

H       = Hub des Hohlkolbens,

$y2 - y1$       = Abstand zwischen zwei Kontrollpunkten der Programmkurve, insbesondere zwischen zwei kritischen Punkten, entsprechend den Programmkurvenspitzen zwischen KP2 und KP1 bezogen auf den Vorformling und/oder den Abstand zwischen KP2 und KP1 bzw. KP2′ und KP1′, entsprechend den Programmkurvenspitzen am Blaskörper.

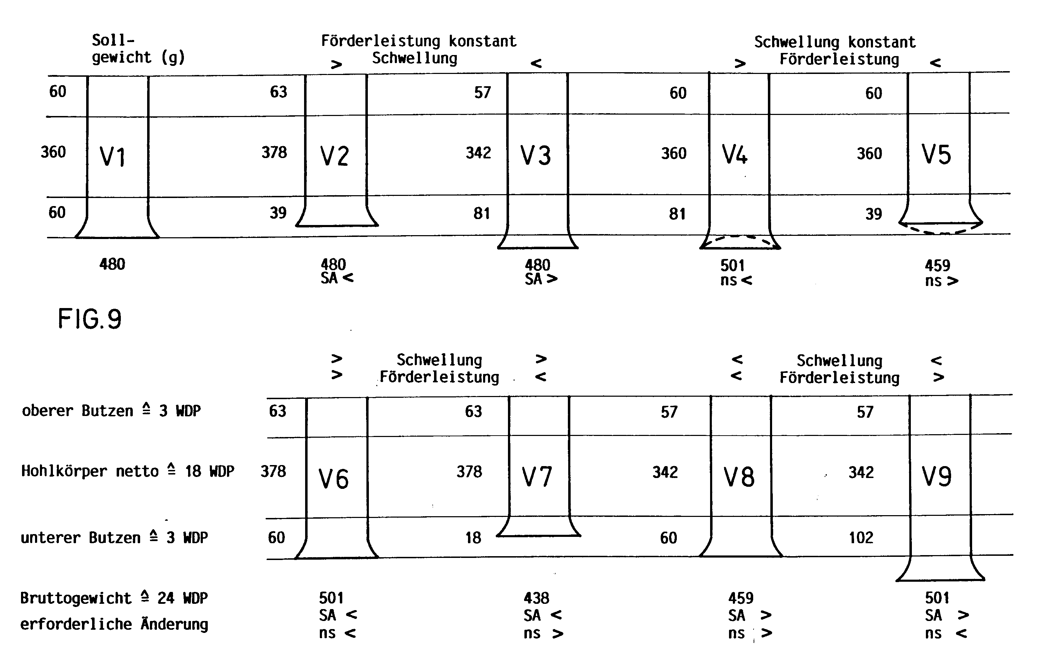

Die Figuren 4 bis 6 veranschaulichen, wie aus zwei Ist-Meß-Werten einige ausgesuchte Vorformlinge gemäß Figur 9 durch die Stellgrößen SA und ns bzw. H wieder in die Richtung der Sollwerte ausgeregelt werden können, wobei SA die Spaltweite, ns die Schneckendrehzahl und H den Speicherhub bedeuten. Die Pfeile zeigen den Verlauf der Pfade. Die V-Zahlen am Ende der Pfade zeigen die Nummer der Pfade, welche gleichzeitig die Nummer des Vorformlings nach Figur 9 wiedergibt.

Wenn sich als Stellwert nur eine Größe ergibt, kann der Fehler sehr schnell ausgeregelt werden. Sind dagegen beide Stellwerte zu verändern, dauert die Ausregelung etwas länger.

Die Figuren 4 bis 6 zeigen außerdem folgendes. Haben sich in der Praxis z.B. durch eine Kunststoffmaterialänderung die Förderleistung des Extruders und das Schwellverhalten geändert, so ergeben sich durch den Vergleich keine eindeutigen Korrektur-Maßnahmen. Hierfür kann es vorteilhaft sein - da eine Veränderung des Düsenspaltes in der hier erforderlichen Größenordnung so gut wie keine Veränderung der Verarbeitungsparameter zur Folge hat -, der Düsenspaltkorrektur SA gegenüber der Schneckendrehzahl ns steuerungsmäßig den Vorrang einzuräumen. Hierzu ist in Figur 1 die Sperrstufe 53 vorgesehen, die erst dann eine Veränderung der Schneckendrehzahl zuläßt, wenn die Korrektur von SA abgeschlossen ist. Es ist jedoch auch möglich, wenn die Korrektur von z.B. SA und ns nach kleiner geregelt werden soll, dann wird SA mit größeren Schritten als ns verstellt.

Um das Ausregeln jedoch noch schneller durchführen zu können, kann ein Vergleichsgewicht aus mehreren Einzelgewichten, vorzugsweise aus dem unteren Butzengewicht und dem Nettogewicht des Hohlkörpers, herangezogen werden. Die Regelung nach der Summe von Einzelgewichten hat den Vorteil, daß dadurch in erster Näherung schon eine Aussage über das Gesamtgewicht des Vorformlings vorliegt. Über das Gesamtgewicht kann eindeutig bei der kontinuierlichen Extrusion die Schneckendrehzahl ns und beim Kopfspeicherbetrieb der Speicherhub H geregelt werden.

Aus Figur 9 erkennt man, welches Gewicht am sinnvollsten zur Regelung herangezogen werden sollte. Würde das Bruttogewicht konstant gehalten, brauchte nur noch die Spaltweite SA so geregelt werden, daß das untere Butzengewicht und/oder das Nettogewicht die gewünschten Sollwerte erreicht. Bei den meisten kontinuierlich arbeitenden Extrusionsblasformanlagen kann das Bruttogewicht nicht als ganzes mit allen Teilen 34, 35 und 36 vor der Entfernung der Abfallbutzen 35 und 36 gewogen werden. In diesen Fällen kann das Bruttogewicht aus den einzelnen Gewichten errechnet werden. Um eine automatische Zuführung der oberen Abfallbutzen zu ersparen, kann in erster Näherung mit dem unteren Butzengewicht und dem Nettogewicht des Hohlkörpers das Bruttogewicht errechnet werden. Ebenso ist es möglich, ein Vergleichsgewicht aus z.B. dem Gewicht des unteren Butzens und dem Nettogewicht des Hohlkörpers zu bilden und der Regelung zuzuführen. In allen Fällen soll erreicht werden, daß durch eindeutige Regelungsparameter ein schnelles Ausregeln von Störgrößen erreicht wird.

Zur Figur 9 sei zur Verdeutlichung einiger wichtiger Zusammenhänge noch folgendes erläutert. In den einzelnen Skizzen sind die Lageänderungen und Gewichtsänderungen eines Ausführungsbeispiels eines Vorformlings in Abhängigkeit von konstanter und variabler Förderleistung sowie konstanter und variabler Schwellung dargestellt. Die linke Skizze in der obersten Reihe gibt die Sollgewichte und die Soll-Lage des Vorformlings an. Wenn man dagegen die beiden rechten Skizzen der oberen Reihe vergleicht, so zeigt sich, daß trotz gleichen Nettogewichts des Hohlkörpers die Lage des Vorformlings und damit auch des Hohlkörpers völlig unterschiedlich ist. Auch bei den übrigen Varianten zeigt sich deutlich, daß ausschließlich eine Nettogewichtsmessung keine eindeutige Bestimmung der Lage des Vorformlings und des Hohlkörpers zur Blasform zuläßt.

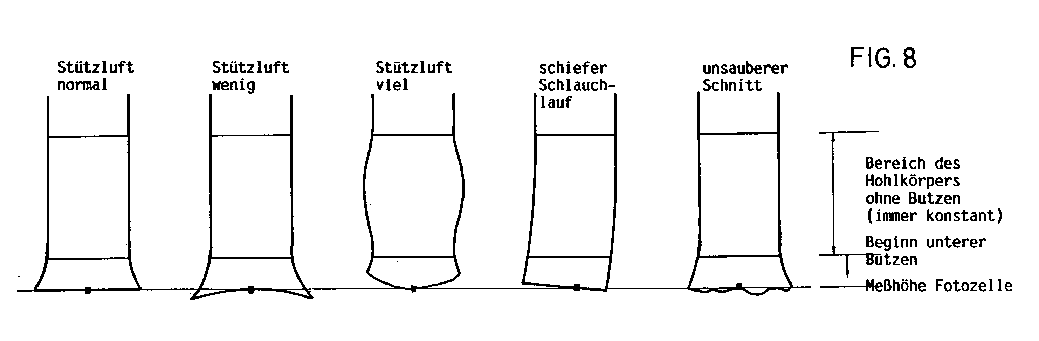

Figur 8 und im Zusammenhang hiermit auch Figur 9 zeigen, daß der untere Rand des schlauchförmigen Vorformlings und demgemäß auch des unteren Butzens nur in den seltensten Fällen völlig waagerecht gemäß der im Bild linken Skizze (Figur 8) verläuft, vielmehr die unterschiedlichsten Formen, wie konkav, konvex, schräg, gezackt, einnehmen kann. Es ist daher nicht möglich, die genaue Lage etwa durch eine Fotozelle, zu bestimmen, selbst wenn die Fotozelle in der Höhe verschoben wird, weil nicht vorhersehbar ist, welcher Punkt des unteren Randes von der Fotozelle erfaßt wird.

Durch die Erfindung hat sich aber überraschenderweise ergeben, daß bei Speicherkopfbetrieb bei konstanter Ausstoßzeit des Vorformlings aufgrund des konstanten Ausstoßvolumens allein die Gewichtsmessung des unteren Butzens ausreichen kann, um eine Regelung der Lage des Vorformlings durchzuführen, so daß der Hohlkörper mit den kritischen Querschnittsbereichen in die richtige Lage zur Blasform gelangt und gleichzeitig das Nettogewicht des Hohlkörpers konstant gehalten wird.

Auch bei kontinuierlichem Betrieb hat sich eindeutig gezeigt, daß allein eine Gewichtsmessung des Nettogewichts des Hohlkörpers nicht zu einer eindeutigen Lageregelung ausreicht. Dagegen hat sich ergeben, daß es bei kontinuierlichem Betrieb vorteilhaft ist, jeweils zwei Meßgrößen zu verwenden, um eine eindeutige Lageregelung vorzunehmen. Nach Figur 4 werden dazu das untere Butzengewicht und das Nettogewicht des Hohlköprers gemessen. Nach den Figuren 6 und 7 werden wiederum zwei Meßgrößen verwendet, nämlich die Abstandsdifferenz y2 - y1 und das Nettogewicht des Hohlkörpers. Bei Speicherkopfbetrieb reicht es im allgemeinen aus, den Düsenaustrittsspalt SA zu regeln. Darüber hinaus kann dann aber auch vorteilhafterweise der Kolbenhub des Massekolbens geregelt werden. Bei kontinuierlichem Betrieb werden dann entsprechend der Düsenaustrittsspalt SA und/oder die Schneckendrehzahl ns geregelt. Die Figuren 4 bis 6 geben einen Überblick über diese Zusammenhänge.

Ein wesentlicher Vorteil ist darin zu sehen, daß sofort nach den ersten Messungen erkennbar ist, um welchen Fehler es sich handelt und ob sich die Maschine in der Anfahr-, Optimierungs- oder Produktionsphase befindet. Dadurch ist die Forderung nach minimalem Ausschuß erfüllt. Als weiterer Vorteil ist hervorzuheben, daß durch die effektiv gemessenen Gewichte und/oder Abstände bei gleichzeitiger Festlegung von mehreren Toleranzbändern erstmals ein eindeutiges Sortieren nach z.B. erster, zweiter usw. Wahl und Ausschuß vorgenommen werden kann.

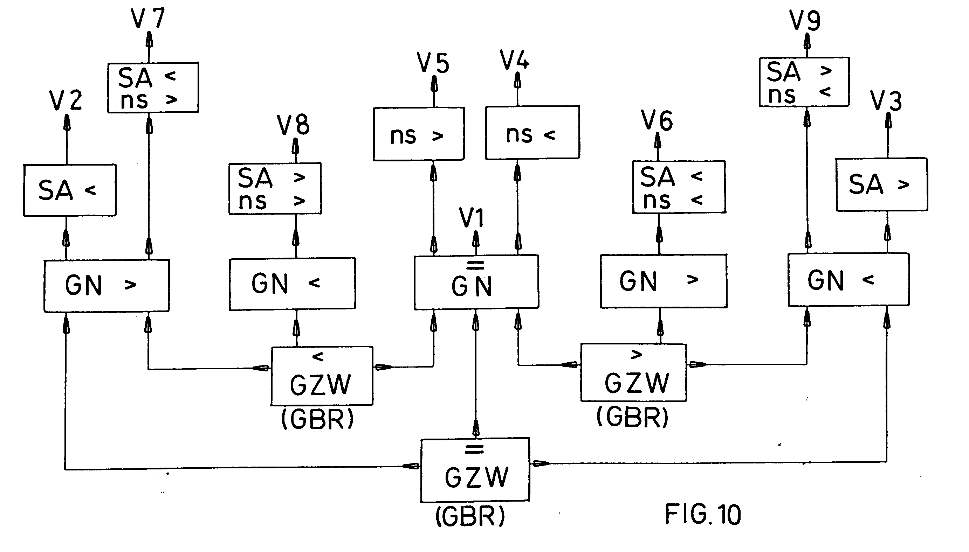

Figur 10 zeigt, wie bei Verwendung von Summen aus mehreren Einzelgewichten GZW in der Vergleichsstufe 44 die Vergleichs- und Regeleinheit 50 (Figur 1) arbeitet.

Der große Vorteil dieser Erfassung und Auswertung ist darin zu sehen, daß beim Vorliegen zweier Werte sofort eindeutig erkannt wird, um welchen Fehler es sich handelt, so daß dadurch eindeutige Regelgrößen ausgegeben werden können, die damit die Konstanthaltung sowohl des Nettogewichts des Hohlkörpers als auch der kritischen Punkte des Hohlkörpers in einer Regeleinheit sogar parallel auszuregeln gestatten.

Figur 10 ist im Zusammenhang mit der Figur 9 zu betrachten. Die Figur 9 zeigt in der oberen linken Skizze das Sollgewicht des Vorformlings V1, das in jedem Falle angestrebt wird. Die übrigen Vorformlinge V2 bis V9 veranschaulichen unterschiedliche Abweichungen aufgrund veränderter Förderleistung und Schwellung. Die in Figur 9 links unten angegebenen Werte beziehen sich auf den Vorformling V1, wobei also der angegebene Wert 60 für den oberen Butzen drei Wanddickenpunkten entspricht, während der Hohlkörper mit dem Wert 360 achtzehn Wanddickenpunkten und der der untere Butzen mit dem Wert 60 wieder drei Wanddickenpunkten entspricht. Das Bruttogewicht des Vorformlings entspricht demgemäß vierundzwanzig Wanddickenpunkten. Bei den Vorformlingen V2 bis V9, die nicht dem angestrebten Vorformling V1 entsprechen, ergeben sich außer den unterschiedlichen gezeichneten Lagen und Gewichtsanteilen noch Änderungen dadurch, daß der untere Rand des Vorformlings, wie in den beiden oberen rechten Skizzen dargestellt ist, zusätzlich konkav oder konvex gewölbt sein kann, insbesondere abhängig von der Stützluft. Zur Erläuterung dieses Sachverhaltes sind bei den Vorformlingen V4 und V5 die entsprechenden unteren Kanten gestrichelt eingezeichnet, entsprechen also im wesentlichen der zweiten und dritten Skizze von links in Figur 8. Wenn also bei gleicher Höhe der Fotozelle die gleiche übereinstimmende Länge erfaßt wird, ergibt sich trotz eines gleichen Nettogewichts der beiden Vorformlinge V4 und V5, die hier mit dem Wert 360 angegeben sind, völlig unterschiedliche Gewichte der unteren Butzen, nämlich mit den Werten 81 bzw. 39. Dadurch erfolgt auch eine Verschiebung der Wanddickenverteilung, insbesondere der kritischen Wanddickenpunkte.

Figur 10 zeigt nun einen Überblick über das Regelungsschema zum Ausregeln der Vorformlinge V2 bis V9 (Figur 9) in Richtung auf den gewünschten Vorformling V1. Die Abkürzungen GZW bedeuten die Summe der Einzelgewichte, z.B. des unteren Butzengewichts und des Nettogewichts, GN die Vergleichsgröße des Nettogewichts des Hohlkörpers, SA die eine Regelgröße, nämlich zur Änderung der Spaltweite des Düsenspalts, und ns die Regelgröße, nämlich zur Änderung der Schneckendrehzahl. Diese Ist-Werte als Vergleichsgrößen zu den entsprechenden Soll-Werten werden gemessen und mit diesen verglichen. Wenn beispielsweise im Bild Figur 10 unten Mitte die Summe der Einzelgewichte GZW und des Nettogewichts GN, verglichen mit den entsprechenden Soll-Werten gleich sind, ergibt sich der Vorformling V1 und es brauchen keine Änderungen durchgeführt zu werden. Wenn nach dem linken Pfad GZW übereinstimmt, das Nettogewicht GN jedoch zu groß ist, würde sich ohne Regelung der Vorformling V2 ergeben. Änderung der Spaltweite des Düsenspaltes SA in Richtung kleiner ergibt nach dem Ausregeln wieder den Vorformling V1. In diesem Sinne ist das Schema nach Figur 10 auszuwerten, und zwar jeweils in Richtung der eingezeichneten Pfeile. Wenn z.B. wie bei Vorformling V7 oder V9 die Summe der Einzelgewichte GZW entweder zu klein oder zu groß ist, ergibt sich bei entweder zu großem Nettogewicht GN oder zu kleinem Nettogewicht die Notwendigkeit, die Stellgrößen im Sinne der eingezeichneten Pfeile zu ändern, um in jedem Falle wieder zu dem Vorformling V1 zu gelangen. Das Schema nach Figur 10 ist in diesem Sinne für alle eingezeichneten Pfade auszulegen. Um das Ausregeln zu beschleunigen, wird vorteilhafterweise bei Änderung von zwei Stellgrößen im gegenläufigen Sinne diese Verstellung gleichzeitig vorgenommen. Dies ist aus Figur 10 zu den Vorformlingen V7 und V9 zu erkennen.

Figur 7 zeigt den Recklinienverlauf bei Verwendung eines Fünfundzwanzig-Punkte-Programmierers mit den Punkten 1P bis 25P. Aus den Abständen zwischen den Punkten 17P und 18P in Formtrennaht einerseits und den Abständen der Punkte 17′P und 18′P unter einem Winkel von 90° zur Formtrennaht erkennt man, daß durch das Ausrecken dieser mit einem Radius versehenen Ecke dieser Abstand mehr als verdoppelt wird. Wenn die Wanddicken am kritischen Punkt KP1 und an KP1′ nach dem Ausrecken gleich groß sein sollen, müßte der Vorformling am Wanddickenpunkt 18′P auch eine um mindestens doppelt so große Wanddicke als am Wanddickenpunkt 18P aufweisen. Dieser Unterschied würde durch das radiale Wanddickenprogramm eingestellt. Zusätzlich muß die Wanddicke am Wanddickenpunkt 18′P für einen optimalen Stauchwert auch noch höher sein als an den Wanddickenpunkten 17′P und 19′P. Dadurch ist eine noch extremere Einstellung erforderlich. Würde durch eine Verschiebung des Wanddickenprogramms zur Blasform um z.B. einen hälftigen Punkt Abstand in Richtung auf den Wanddickenpunkt 19′P erfolgen, würde sich folgendes einstellen: die extreme Verdickung am Wanddickenpunkt 18′P verlagert sich aufgrund der Verschiebung um einen halben Abstand zwischen zwei Wanddickenpunkte und verreckt sich zusätzlich durch die Steifigkeit von dem Punkt 18″P um den Abstand x18 in Richtung des Punktes 19′P, und zwar bis zum Punkt 18‴P. Der Wanddickenpunkt 17′P verschiebt sich zwar um den gleichen halben Abstand zwischen zwei Wanddickenpunkte in Richtung nach dem Wanddickenpunkt 18′P bis zum Punkt 17″P und durch die zusätzliche Verreckung noch weiter bis zum Punkt 17‴P. Das Material ist aber in diesem Bereich nur um einen geringeren Betrag verreckt worden. Als Auswirkung ergibt sich für die angesprochenen Strecken zwischen den Punkten 17‴P bzw. 18‴P eine längere Strecke als für die Punkte 17′P bzw. 18′P vorhanden wäre. Damit ergibt sich eine erhebliche Verringerung der Wanddicke an dem kritischen Punkt KP1′, da mit der gleichen Vorformlingsdicke eine größere Strecke ausgereckt wird. Bedenkt man die vielen Störfaktoren, die ein Vorformling für optimale Stauchwerte bei minimalem Verzug erfährt, so wird klar, daß in erster Linie die Lage des kritischsten Wanddickenpunktes, und zwar in diesem Beispiel der Punkt KP1′, in die Lage zur Blasform gebracht werden muß, die den günstigsten Kompromiß zu den weiteren kritischen Punkten, wie z.B. KP2′, aufweist. Der günstigste Kompromiß sei mit einem Beispiel erläutert. Wenn sich herausstellt, daß sich der Punkt KP1′ an der richtigen Stelle befindet, dagegen der untere kritische Punkt KP2′ nach oben oder unten hin verschoben ist, und zwar bei konstantem Nettogewicht, muß eine Maßnahme getroffen werden, um beide kritischen Punkte möglichst nah an die optimalen Stellen zu bringen. Es kann dabei günstig sein, daß für beide kritischen Punkte ein gewisses Mittelmaß getroffen wird, das heißt daß sich beide Punkte etwas nähern oder auseinandergehen können. Die meisten Wanddickenprogrammierer weisen mindestens fünfzig Wanddickenpunkte auf, so daß man nicht auf den im vorliegenden Beispiel genannten Kompromiß bezüglich des Punktes KP2 zwischen den Wanddickenpunkten 8 und 9 liegend angewiesen ist. Figur 7 veranschaulicht noch die Gesamtlänge y des Vorformlings, die wichtigen Abstände y1 und y2 zu den kritischen Punkten KP1 und KP2 sowie den unteren Butzen 35 und den oberen Butzen 36.

Die heutigen Wanddickenprogrammierer teilen das Volumen des Vorformlings in n-1 gleiche Volumensabschnitte. Dabei bedeutet n die Anzahl der Punkte des Programmierers. Gemäß Figur 7 ergeben sich vierundzwanzig Volumensabschnitte, welche in erster Näherung vierundzwanzig gleiche Gewichtsabschnitte bedeuten. Daraus ergeben sich folgende Punkte-Abstände und Gewichtsanteile:

$$y = 24$$
$$y1 = 6{,}5$$
$$y2 - y1 = 9{,}5$$
$$GUB = 3$$
$$GOB = 3$$
$$GN = 18$$
$$GZW = GUB + GN = 21$$
$$GBR = 24$$

Damit sei gesagt, daß in erster Näherung die y-Strecken den angegebenen Punkteabständen entsprechen. Auch die Gewichtsanteile sind in Figur 7 bezogen auf diese angegebenen Punkteabstände. Solange der Gewichtsanteil des unteren Butzens 35 konstant bleibt, sind auch die Gewichtsanteile zwischen den zugehörigen Punkten konstant, d.h. zu den zu y1 und y2 zugehörigen Punkten. Es ist dann auch das Nettogewicht des Hohlkörpers und das Gewicht des oberen Butzens konstant. Vorteilhaft ist es, daß für jeden Betriebszustand, der sich von Fall zu Fall ändern kann, das Gewicht des unteren Butzens bzw. die Summe der Einzelgewichte GZW auf einen konstanten Wert geregelt wird, d.h. daß bei automatischer

10

Lagenkontrolle der kritischen Punkte für jeden geänderten Betriebszustand ein neues Soll-Gewicht des unteren Butzens bzw. GZW automatisch festgelegt werden kann.

Die variable Wanddicke ist mit dem Pfeil WD angedeutet und setzt sich aus der Programmkurve und dem Grundspalt 76 zusammen. Für die Änderung des Düsenspaltes kann der Grundspalt 76 und/oder der Faktor, mit dem die Programmkurve multipliziert wird, verwendet werden. Finden gezielte Wanddickenmessungen statt, kann aufgrund dieser Ergebnisse entschieden werden, ob der Grundspalt oder der Faktor der Programmkurve verändert werden muß.

Figur 7 veranschaulicht ferner die gestrichelt gezeichneten Spitzen der Programmkurve zu den kritischen Punkten KP1 und KP2, die durch die Erfindung verwirklicht und materialmäßig in die richtige Lage zur Blasform gebracht werden können, während der gesamte Stand der Technik in der Praxis nur in der Lage ist, die zugehörigen, ausgezogen gezeichneten, abgeflachten Programmkurven zu fahren.

Es sei hier besonders hervorgehoben, daß einer der wesentlichsten Vorteile der Erfindung darin besteht, daß mit ein und derselben Vorrichtung sowohl das Nettogewicht des Hohlkörpers und die Lage der kritischen Querschnittsbereiche zur Blasform konstant gehalten werden können.

Im Zusammenhang mit Figur 3 wurde weiter oben ein Meßgeber beschrieben, der in die Blasform ein- bzw. ausfahrbar ist. Statt dessen kann auch eine vorteilhafte Ausgestaltung der Erfindung dahingehend getroffen werden, daß dieser Meßgeber feststehend in der Blasform angeordnet ist. Die Vorrichtung kann auch so ausgestaltet sein, daß der Meßgeber höhenverstellbar ist, und zwar zu dem Zweck, daß der Zeitablauf zwischen Erfassung der betreffenden Markierung und der Fixierung des Vorformlings in der Blasform konstant ist. Hierdurch wird erreicht, daß die Markierung mit dem kritischen Querschnittsbereich übereinstimmt.

Die Erfindung ist auch anwendbar, wenn bei einer anderen nicht dargestellten Extrusionsblasformanlage erst der gesamte Blaskörper zur Ermittlung des Bruttogewichtes GBR einer Waage zugeführt wird und danach erst die Abfallbutzen entfernt werden. Dieses Bruttogewicht könnte z.B. in der Vergleichs- und Regelstufe 50 (Figur 1) an Stelle der Summe von Einzelgewichten GZW verwendet werden und bei der kontinuierlichen Extrusion die Schneckendrehzahl und beim Speicherkopfbetrieb den Speicherhub zu regeln gestatten. Diese Anordnung hätte unter anderem den Vorteil, ohne vorherigen Vergleich mit einer zweiten Größe direkt die richtige Änderung durchführen zu können. In einer nachfolgenden Station werden dann die Abfallbutzen entfernt. Wie aus Figur 9 zu Vorformling V2 und V3 hervorgeht, kann sowohl das Nettogewicht als auch der untere Abfallbutzen als zweite Stellgröße verwendet werden. Vorteilhafterweise wird dazu das Nettogewicht verwendet und bei Abweichungen der Düsenspalt SA verändert.

In Verbindung mit Kontrollmaßnahmen für die richtige Lage der kritischen Punkte wird das Bruttogewicht GBR verwendet. Das heißt, daß bei der automatischen Abstandskontrolle in das Abstandsglied 43 statt eines neuen unteren Butzengewichtes GUB ein neues Bruttogewicht GBR-Soll eingegeben wird.

Ohne den Rahmen der Erfindung zu verlassen, kann eine weitere vorteilhafte Maßnahme zur Lageänderung darin bestehen, daß die Lage des betreffenden Vorformlings zu der Blasform in Abhängigkeit von mindestens einem vorbestimmten Querschnittsbereich des Vorformlings, vorzugsweise einem kritischen Bereich, derart geregelt und/oder gesteuert bzw. eingestellt wird, daß mittels eines Meßgebers die Länge des Vorformlings bis zu dem vorbestimmten Querschnittsbereich mit dem vorgegebenen Programm in einem Wanddickenprogrammierer verglichen und der noch auszustoßende Anteil des Vorformlings so bemessen bzw. verändert wird, daß der Querschnittsbereich in die richtige Lage zur Blasform gelangt. Die Einstellung eines eventuellen zweiten kritischen Punktes würde, wie in Figuren 6 und 7 dargestellt, auf konstante Werte erfolgen. Dies ist neben den schon beschriebenen Maßnahmen wie folgt zu erreichen. Das Wanddickenprogramm y könnte gespreizt oder verkürzt werden und die erforderliche Vorformlingslänge durch Abstandsänderungen von y3 und/oder y1 so vorgenommen werden, daß die Abstände y2 - y1 bzw. KP2′ und KP1′ konstant gehalten werden. Bei der Abstandsregelung in Verbindung mit einer Regelung des Nettogewichts des Hohlkörpers ist vorteilhafterweise der Abstandsregelung steuerungsmäßig der Vorrang einzuräumen.

Wie bereits oben angedeutet, sei hier noch ein wichtiger Gesichtspunkt der Erkenntnis der Erfindung hervorgehoben. Eine Regelung der Lage über das untere Butzengewicht oder über die Summe der Einzelgewichte ist erheblich genauer als über die Unterkante des Vorformlings. Bedingt durch die Störfaktoren und den daraus resultieren Fehlermöglichkeiten sind nach der Erfassung der Lage der kritischen Punkte ggfs. Korrekturen bezüglich der Lage dieser Punkte erforderlich. Bei nur einem kritischen Punkt wird die Lagensteuerung bei gleichzeitiger Nettogewichtsregelung des Hohlkörpers nur auf diesen Punkt bezogen. Sind zwei oder mehr kritische Punkte vorhanden, muß das günstigste Mittel der Lage aller kritischen Punkte ermittelt und eingestellt werden. Dieses Einstellen kann über das Einstellen eines neuen Sollgewichts des unteren Butzens oder der Summe aus Einzelgewichten oder dem Bruttogewicht des Blaskörpers von Hand vorgenommen werden. Vorteilhafterweise wird aufgrund der Lagenkontrolle ein neuer Soll-Wert durch eine ist-meßwert-erfassende Einrichtung vorgegeben. Um auf den Vergleich mit einem weiteren Gewichtswert verzichten zu können, kann die beschriebene Abstandssteuerung und/oder -regelung am Vorformling und/oder am Hohlkörper bei gleichzeitiger Nettogewichtsregelung des Hohlkörpers eingesetzt werden.

Eine vorteilhafte Ausgestaltung der Erfindung ergibt sich dadurch, daß zur Erfassung der Lage des Vorformlings ein waagerecht angebrachtes Lichtband oder eine Reihe waagerecht angeordneter Fotozellen vorgesehen sind, und daß ein Mittelwert der in der Höhe unterschiedlichen Punkte gebildet wird. Ein derartiges Lichtband bzw. eine Reihe von Fotozellen können z.B. dazu verwendet werden, irgendwelche Kanten, Vorsprünge, Markierungen u. dgl. an irgendeiner Stelle in der Höhe des Vorformlings oder des ausgeformten Blaskörpers zu erfassen. Dies ist von Wichtigkeit, wenn diese zu erfassenden Stellen eine gewisse waagerechte Ausdehnung aufweisen, in der Höhe aber mehr oder weniger von der exakten Waagerechten abweichen, also in irgendeiner Form höhenversetzt sind.

Die Erfindung ist immer anwendbar, wenn mindestens ein Gewicht des ausgeformten Blaskörpers durch einen Ist-Soll-Wert-Vergleich ermittelt und wenn nach Lagenkontrolle mindestens zu einem kritischen Punkt eine automatische Soll-Wert-Verstellung der die Lage einstellenden Einheit vorgenommen wird.

## Tabelle

**Forderungen** an Hohlkörper, die im Extrusionsblasformverfahren hergestellt werden, z.B. Kanister, Fässer, Kunststoff-Kraftstoff-Behälter (Benzintanks für Kraftfahrzeuge)

**Beeinflussung vorwiegend durch:**

| Nr. Kriterium | PWDS/SFDR | Wanddickenlagen-steuerung | Gewichts-regelung | Temperatur | Maschinenablauf u. Personal | Kunststoffmaterial |
|---|---|---|---|---|---|---|
| 1. Einhaltung der minimalen Wanddicke | x | x | | | | |
| 2. Hoher Langzeit-Stauchdruck, d.h. gute Stapelfestigkeit | x | x | | | | |
| 3. Hohe Kennzahl, d.h. geringer Verformungsweg im Stapel | | x | | | | |
| 4. Hohe Fallfestigkeit | x | x | | x | x | x |
| 5. Geringer Verzug und gute Maßhaltigkeit | | x | | | | |
| 6. Gute Spannungsrißbeständigkeit | x | | | | | x |
| 7. Konstantes Einsatzgewicht | | | x | | | |
| 8. Dichtigkeit | | x | | | x | |
| 9. Gute Oberfläche | | | | | x | x |

**Patentansprüche**

1. Verfahren zum Extrusionsblasformen eines Hohlkörpers aus thermoplastischem Kunststoff, bei dem
   - ein schlauchförmiger Vorformling (9) mittels eines Schneckenextruders (2) aus dem Düsenspalt (8) eines Strangpreßkopfes (1) extrudiert und dabei der Düsenspalt (SA) nach Funktionswerten eines Wanddickenprogramms (13) verändert wird,
   - der extrudierte Vorformling (9) in einer Blasform (10, 11) zu einem Blaskörper aufgeweitet wird,
   - der Blaskörper aus der Blasform (10, 11) ausgeformt sowie zumindest in den Hohlkörper (34), einen oberen Abfallbutzen (36) und einen unteren Abfallbutzen (35) aufgeteilt wird,
   - das Nettogewicht (GN) des Hohlkörpers (34) gemessen, mit einem Hohlkörper-Sollgewicht verglichen und die Nettogewichtsabweichung ermittelt wird,

   wobei das Wanddickenprogramm (13) mindestens einen Funktionsmaximalwert (23, 24) aufweist, der einem kritischen Hohlkörperquerschnitt (KP1, KP2) zugeordnet ist, und wobei der Düsenspalt (SA) korrigierend so verstellt wird, daß das Nettogewicht (GN) eines nachfolgenden Hohlkörpers (34) dem Hohlkörper-Sollgewicht entspricht, **dadurch gekennzeichnet,** daß zusätzlich zu dem Hohlkörper-Nettogewicht (GN) das Gesamtgewicht (GBR) des Blaskörpers oder das Gewicht (GZW, GUB) eines weiteren Blaskörperabschnittes gemessen, dieser zweite Gewichtsmeßwert (GBR, GZW, GUB) mit einem zweiten Gewichts-Sollwert verglichen sowie die Schneckendrehzahl (ns) des Extruders (2) und/oder der Düsenspalt (SA) zum Zwecke des Ist-Wert/Soll-Wert-Ausgleichs bei einem nachfolgenden Blaskörper nach Maßgabe der zweiten Gewichtsdifferenz verstellt wird und daß zum Zwecke der Lagekorrektur eines nachfolgenden Blaskörpers ein neuer zweiter Gewichts-Sollwert eingestellt wird, wenn die beiden Gewichtsmeßwerte (GN, GBR bzw. GN, GZW bzw. GN, GUB) den Sollwerten entsprechen und die Lage des kritischen Hohlkörperquerschnitts nicht mehr im Toleranzbereich ist.

2. Verfahren nach Anspruch 1, dadurch gekennzeichnet, daß das Gewicht (GUB) des unteren Abfallbutzens gemessen, mit einem Abfallbutzen-Sollgewicht verglichen und die Schneckendrehzahl (ns) zur Korrektur des Abfallbutzengewichtes (GUB) verändert wird, wobei zunächst eine Düsenspaltkorrektur (SA) zum Ausgleich einer Hohlkörper-Nettogewichtsabweichung (GN) durchgeführt und erst nach erfolgter Korrektur des Hohlkörper-Nettogewichtes (GN) die Schneckendrehzahl (ns) nach Maßgabe der Abweichung des Abfallbutzengewichtes (GUB) von dem Abfallbutzen-Sollgewicht verstellt wird.

3. Verfahren nach Anspruch 1, dadurch gekennzeichnet, daß das Gewicht (GUB) des unteren Abfallbutzens gemessen und durch Summenbildung mit dem gemessenen Hohlkörper-Nettogewicht (GN) ein Vergleichswert (GZW) mit einem Vergleichsgewicht-Sollwert verglichen und die Schneckendrehzahl (ns) nach Maßgabe des Ist-Wert/Soll-Wert-Vergleichs verstellt wird, wobei erforderliche Korrekturen des Düsenspaltes (SA) und der Schneckendrehzahl (ns) gleichzeitig durchgeführt werden.

4. Verfahren nach Anspruch 3, dadurch gekennzeichnet, daß aus den Gewichtsmeßwerten (GUB) des unteren Abfallbutzens und des Hohlkörpers (GN) das Gesamtgewicht (GBR) des Blaskörpers näherungsweise errechnet und der so ermittelte Wert als Vergleichsgewicht verwendet wird.

5. Verfahren nach Anspruch 1, dadurch gekennzeichnet, daß das Gesamtgewicht (GBR) des Blaskörpers vor der Aufteilung in den Hohlkörper (34) sowie die Abfallbutzen (35, 36) unmittelbar gemessen oder durch Summenbildung der im Anschluß an die Aufteilung gemessenen Einzelgewichte ermittelt wird, daß das Blaskörper-Gesamtgewicht (GBR) mit einem Blaskörper-Sollgewicht verglichen und die Schneckendrehzahl (ns) nach Maßgabe des Ist-Wert/Soll-Wert-Vergleichs verstellt wird, wobei erforderliche Korrekturen des Düsenspaltes (SA) und der Schneckendrehzahl (ns) gleichzeitig durchgeführt werden.

6. Verfahren nach einem der Ansprüche 1 bis 5, dadurch gekennzeichnet, daß der Vorformling (9) an mindestens einem kritischen Querschnittsbereich (KP1, KP2) außenseitig markiert sowie die Lage der Markierung (27, 28) an dem Blaskörper kontrolliert wird und daß zum Zwecke der Lagekorrektur eines nachfolgenden Vorformlings (9) ein neuer zweiter Gewichtssollwert eingestellt wird, wenn die Gewichtsmeßwerte mit den Gewichtssollwerten übereinstimmen und die Lage der Markierung (27, 28) von einer vorgegebenen Soll-Lage abweicht.

7. Verfahren nach Anspruch 6, dadurch gekennzeichnet, daß die Markierungen (27, 28) durch eine Meßeinrichtung (29, 77; 37, 38) erfaßt und die Meßwerte einem Vergleichs- und Regelglied (39)

EP 0 345 474 B1

zugeführt werden und daß ein neuer zweiter Gewichtssollwert automatisch eingestellt wird, wenn die Gewichtsmeßwerte mit den Gewichtssollwerten übereinstimmen und die Lage der Markierungen (27, 28) von der vorgegebenen Soll-Lage abweicht.

8. Verfahren nach einem der Ansprüche 1 bis 7, dadurch gekennzeichnet, daß in der Blasform (10, 11) eine Wanddickenmessung (72, 73) des Blaskörpers durchgeführt wird.

9. Verfahren nach einem der Ansprüche 1 bis 8, dadurch gekennzeichnet, daß der zweite Gewichtssollwert so eingestellt wird, daß bei mehreren kritischen Hohlkörperquerschnitten (KP1, KP2) die Abweichungen der Hohlkörperquerschnitte von den zugeordneten Funktionsmaximalwerten (23, 24) annähernd gleich groß sind.

10. Verfahren zum Extrusionsblasformen eines Hohlkörpers aus thermoplastischem Kunststoff, bei dem
   - ein schlauchförmiger Vorformling (9) aus dem Düsenspalt (8) eines im Speicherkopfbetrieb arbeitenden Strangpreßkopfes (1) extrudiert und dabei der Düsenspalt (SA) nach Funktionswerten eines Wanddickenprogramms (13) verändert wird,
   - der extrudierte Vorformling (9) einer Blasform (10, 11) zu einem Blaskörper aufgeweitet wird,
   - der Blaskörper aus der Blasform (10, 11) ausgeformt sowie zumindest in den Hohlkörper (63), einen oberen Abfallbutzen (65) und einen unteren Abfallbutzen (66) aufgeteilt wird,
   wobei das Wanddickenprogramm (13) mindestens einen Funktionsmaximalwert (23, 24) aufweist, der einem kritischen Hohlkörperquerschnitt (KP1, KP2) zugeordnet ist, **dadurch gekennzeichnet,** daß das Gewicht (GUB) des unteren Abfallbutzens (66) oder das Nettogewicht (GN) des Hohlkörpers (63) gemessen, der Gewichtsmeßwert mit einem Gewichtssollwert verglichen und der Düsenspalt (SA) zum Zwecke des Ist-Wert/Soll-Wert-Ausgleichs bei einem nachfolgenden Blaskörper nach Maßgabe der Gewichtsdifferenz verstellt wird und daß der Gewichtssollwert zum Zwecke der Lagekorrektur eines nachfolgenden Blaskörpers veränderbar ist und so eingestellt wird, daß der kritische Hohlkörperquerschnitt (KP1, KP2) des Blaskörpers an eine vorgegebene Stelle der Blasform (10, 11) gelangt.

11. Verfahren nach Anspruch 10, dadurch gekennzeichnet, daß zusätzlich zu der ersten Gewichtsmessung (GN) das Gesamtgewicht (GBR) oder das Gewicht eines weiteren Blaskörperabschnittes (GUB, GZW) gemessen, dieser zweite Gewichtsmeßwert (GUB, GZW) mit einem zweiten Gewichtssollwert verglichen sowie der Speicherhub (H) zum Zwecke des Ist-Wert/Soll-Wert-Ausgleichs bei einem nachfolgenden Blaskörper verändert wird.

12. Verfahren nach Anspruch 11, dadurch gekennzeichnet, daß das Gewicht des unteren Abfallbutzens (GUB) und das Hohlkörper-Nettogewicht (GN) gemessen und diese Gewichtsmeßwerte zur Steuerung des Düsenspaltes (SA) und des Speicherhubes (H) verwendet werden.

13. Verfahren nach Anspruch 11, dadurch gekennzeichnet, daß das Gewicht (GUB) des unteren Abfallbutzens und das Hohlkörper-Nettogewicht (GN) gemessen werden, daß einer der Gewichtsmeßwerte zur Steuerung des Düsenspaltes (SA) und das Summengewicht (GZW) aus den beiden Gewichtsmeßwerten zur Steuerung des Speicherhubes (H) verwendet werden.

14. Verfahren nach einem der Ansprüche 10 bis 13, dadurch gekennzeichnet, daß der Vorformling (9) an mindestens einem kritischen Querschnittsbereich (KP1, KP2) außenseitig markiert sowie die Lage der Markierung (27, 28) an dem Blaskörper (63) kontrolliert wird und daß zum Zwecke der Lagekorrektur eines nachfolgenden Vorformlings (9) in der Blasform (10, 11) ein neuer Gewichtssollwert eingestellt wird, wenn bei übereinstimmenden Gewichts-Ist/Sollwerten die Lage der Markierung (27, 28) von einer vorgegebenen Soll-Lage abweicht.

15. Verfahren nach einem der Ansprüche 10 bis 14, dadurch gekennzeichnet, daß die Markierungen (27, 28) durch eine Meßeinrichtung (29, 77; 37, 38) erfaßt und die Meßwerte einem Vergleichs- und Regelglied (39) zugeführt werden und daß ein neuer Gewichtssollwert automatisch eingestellt wird, wenn die Gewichtsmeßwerte mit den Gewichtssollwerten übereinstimmen und die Lage der Markierungen (27, 28) von der vorgegebenen Soll-Lage abweicht.

16. Verfahren nach einem der Ansprüche 11 bis 16, dadurch gekennzeichnet, daß in der Blasform (10, 11) eine Wanddickenmessung (72, 73) des Hohlkörpers durchgeführt wird.

14

**17.** Verfahren nach einem der Ansprüche 11 bis 16, dadurch gekennzeichnet, daß der zweite Gewichtssollwert so eingestellt wird, daß bei mehreren kritischen Hohlkörperquerschnitten (KP1, KP2) die Abweichungen der Hohlkörperquerschnitte von den zugeordneten Funktionsmaximalwerden (23, 24) annähernd gleich groß sind.

**18.** Verfahren zum Extrusionsblasformen eines Hohlkörpers aus thermoplastischem Kunststoff, bei dem
- ein schlauchförmiger Vorformling (9) mittels eines Schneckenextruders (2) aus dem Düsenspalt (8) eines Strangpreßkopfes (1) extrudiert und dabei der Düsenspalt (8) nach Funktionswerten eines Wanddickenprogramms (13) verändert wird,
- der extrudierte Vorformling (9) in einer Blasform (10, 11) zu einem Blaskörper aufgeweitet wird,
- der Blaskörper aus der Blasform (10, 11) ausgeformt sowie zumindest in den Hohlkörper (34), einen oberen Abfallbutzen (35) und einen unteren Abfallbutzen (36) aufgeteilt wird,
- ein Gewichtswert (GN, GUB) des aufgeteilten Blaskörpers gemessen, mit einem Sollgewicht verglichen und die Gewichtsabweichung ermittelt wird,

wobei das Wanddickenprogramm (13) mindestens einen Funktionsmaximalwert (23, 24) aufweist, der einem kritischen Hohlkörperquerschnitt (KP1, KP2) zugeordnet ist, und wobei der Düsenspalt (SA) korrigierend so verstellt wird, daß das Gewicht (GN, GUB) eines nachfolgenden Blaskörpers dem Sollgewicht entspricht, **dadurch gekennzeichnet,** daß der Vorformling (9) bei der Extrusion an zwei, Kontrollpunkten der Programmkurve (13) zugeordneten Stellen markiert wird, daß der Abstand ($y_2-y_1$) zwischen den Markierungen (27, 28) gemessen und die Abweichung von einem Abstandssollwert bestimmt wird und daß die Schneckendrehzahl (ns) des Extruders (2) und/oder der Düsenspalt (SA) zum Zwecke des Ist-Wert/Soll-Wert-Ausgleichs bei einem nachfolgenden Blaskörper nach Maßgabe dieser Abweichung verstellt wird.

**19.** Verfahren nach Anspruch 18, dadurch gekennzeichnet, daß die Markierungen (27, 28) kritischen Hohlkörperquerschnitten (KP1, KP2) zugeordnet sind.

**20.** Verfahren nach Anspruch 18 oder 19, dadurch gekennzeichnet, daß bei der Abstandsregelung ($y_2-y_1$) in Verbindung mit der Regelung des Hohlkörper-Nettogewichtes (GN) der Abstandsregelung steuerungsmäßig Vorrang eingeräumt wird.

**21.** Vorrichtung zur Durchführung des Verfahrens nach einem der Ansprüche 1 bis 20, mit
a) einem Strangpreßkopf (1), welcher einen ringförmigen Düsenspalt (8) aufweist und mit einem Extruderanschluß (2) sowie einer Vorrichtung (6, 15) zum Verändern der Spaltweite des Düsenspaltes (8) versehen ist,
b) einem Wanddickenprogrammierer (12) zur Betätigung der Düsenspaltverstellvorrichtung (6, 15), welcher ein Wanddickenprogramm (13) aufweist und nach Funktionswerten des Wanddickenprogramms (13) eine Änderung der Spaltbreite des Düsenspaltes (8) bewirkt,
c) einer Blasform (10, 11) zum Aufweiten eines aus dem Düsenspalt (8) des Strangpreßkopfes (1) austretenden schlauchförmigen Vorformlings (9) zu einem Blaskörper,
d) einer Trennvorrichtung zum Abtrennen des Blaskörpers nach dem Ausformen aus der Blasform (10, 11) in mindestens einen Hohlkörper (34; 63), einen oberen Abfallbutzen (36; 65) sowie einen unteren Abfallbutzen (35; 66),
e) mindestens einer Waage (40),
f) einer Vergleichs- und Regeleinheit (50), welche den Gewichtsmeßwert der Waage (40) mit einem eingegebenen Gewichtssollwert vergleicht und
g) einer Einstelleinrichtung (51, 52; 53, 74; 67 bis 71) zum Verändern der Spaltweite (SA) des Düsenspaltes (8) und/oder der Schneckendrehzahl (ns) des Extruders und/oder des Speicherhubes (H) eines im Speicherkopfbetrieb arbeitenden Strangpreßkopfes (1) in Abhängigkeit des Ist/Soll-Gewichtvergleichs,

wobei das Wanddickenprogramm (13) mindestens einen Funktionsmaximalwert (23, 24) aufweist, der einem kritischen Hohlkörperquerschnitt (KP1, KP2) zugeordnet ist, **gekennzeichnet durch** eine Markierungsvorrichtung (75) zum Anbringen von Markierungen (27, 28) am Vorformling (9) und durch Meßgeber (29, 77; 37, 38) zur Erfassung der Markierungen (27, 28).

**22.** Vorrichtung nach Anspruch 21, dadurch gekennzeichnet, daß ein Meßgeber (29) in der Blasform (10, 11) zur Anpassung an den Zeitablauf zwischen dem Zeitpunkt des Erfassens der Markierung (27) und dem Zeitpunkt des Schließens der Blasform (10, 11) höhenverstellbar ist.

**23.** Vorrichtung nach Anspruch 21 oder 22, dadurch gekennzeichnet, daß Meßgeber (37, 38) außerhalb der Blasform (10, 11) angebracht sind, mit denen die Markierungen (27, 28) an den Blaskörpern (34) erfaßbar sind.

**24.** Vorrichtung zur Durchführung des Verfahrens nach einem der Ansprüche 1 bis 20, mit

a) einem Strangpreßkopf (1), welcher einen ringförmigen Düsenspalt (8) aufweist und mit einem Extruderanschluß (2) sowie einer Vorrichtung (6, 15) zum Verändern der Spaltweite des Düsenspaltes (8) versehen ist,

b) einem Wanddickenprogrammierer (12) zur Betätigung der Düsenspaltverstellvorrichtung (6, 15), welcher ein Wanddickenprogramm (13) aufweist und nach Funktionswerten des Wanddickenprogramms (13) eine Änderung der Spaltweite des Düsenspaltes (8) bewirkt, wobei das Wanddickenprogramm (13) mindestens einen Funktionsmaximalwert (23, 24) aufweist, der einem kritischen Hohlkörperquerschnitt (KP1, KP2) zugeordnet ist,

c) einer Blasform (10, 11) zum Aufweiten eines aus dem Düsenspalt (8) des Strangpreßkopfes (1) austretenden schlauchförmigen Vorformlings (9) zu einem Blaskörper,

d) einer Trennvorrichtung zum Abtrennen des Blaskörpers nach dem Ausformen aus der Blasform (10, 11) in mindestens einen Hohlkörper (34; 63), einen oberen Abfallbutzen (36; 65) sowie einen unteren Abfallbutzen (35; 66),

e) mindestens einer Waage (40),

f) einer Regeleinrichtung und

g) einer Einstelleinrichtung (51, 52; 53, 74; 67 bis 71) zum Verändern der Spaltweite (SA) des Düsenspaltes (8) und/oder der Schneckendrehzahl (ns) des Extruders und/oder des Speicherhubes (H) eines im Speicherkopfbetrieb arbeitenden Strangpreßkopfes (1),

wobei die Regeleinrichtung Regelglieder (39, 41, 42, 43) zur Meßwertaufnahme, eine Additionsstufe (44) sowie eine Vergleichs- und Regelstufe (50) aufweist, welche Vergleichs- und Regelstufe die Meßwerte und eingegebene Sollwerte miteinander vergleicht und nach Maßgabe von Istwert/Sollwert-Abweichungen Steuersignale an die Einstelleinrichtung (51, 52; 53, 74; 67 bis 71) zur Korrektur des Düsenspaltes (SA) und/oder der Schneckendrehzahl (ns) und/oder des Speicherhubes (H) abgibt, **dadurch gekennzeichnet,** daß die Regeleinrichtung außerdem einen elektronischen Baustein (46, 47) für die Anfahrphase sowie einen elektronischen Baustein (48, 49) für die Produktionsphase umfaßt, wobei der in der Anfahrphase der Extrusionsblasformanlage aktivierte elektronische Baustein (46, 47) für die Anfahrphase eine sofortige Nachregelung von Gewichtsabweichungen veranlaßt und wobei der in der anschließenden Produktionsphase wirksame elektronische Baustein (48, 49) für die Produktionsphase eine Tendenzstufe (49) umfaßt.

**25.** Vorrichtung nach Anspruch 24, dadurch gekennzeichnet, daß der elektronische Baustein (46, 47) für die Anfahrphase ein Zeitglied (47) aufweist und daß nach einem vorgegebenen Zeitablauf eine Umschaltung auf den elektronischen Baustein für die Produktionsphase erfolgt.

**26.** Vorrichtung nach Anspruch 24, dadurch gekennzeichnet, daß eine automatische Umschaltung von dem elektronischen Baustein (46, 47) für die Anfahrphase auf den elektronischen Baustein (48, 49) für die Produktionsphase erfolgt, wenn die Abweichungen der Gewichtsmeßwerte von den Gewichtssollwerten eine vorbestimmte Größenordnung erreicht haben.

**Claims**

**1.** A process for the extrusion blow moulding of a hollow body from synthetic thermoplastic material, wherein

- a flexible tubular preform (9) is extruded from the extrusion die gap (8) of an extrusion head (1) by means of a screw extruder (2) and in the course of this procedure the extrusion die gap (SA) is varied in accordance with values of the functions of a wall thickness program (13),
- the extruded preform (9) is expanded in a blowing mould (10, 11) to form a blown body,
- the blown body is demoulded from the blowing mould (10, 11) and is divided up at least into the hollow body (34), an upper waste slug (36) and a lower waste slug (35),
- the net weight (GN) of the hollow body (34) is measured and compared with a hollow body scheduled weight, and the net weight deviation is determined,

wherein the wall thickness program (13) comprises at least one maximum value of a function (23, 24) which is associated with a critical hollow body cross-section (KP1, KP2), and wherein the extrusion die gap (SA) is correctively adjusted so that the net weight (GN) of a following hollow body (34) corresponds to the hollow body scheduled weight, characterised in that in addition to the hollow body net weight (GN) the gross weight (GBR) of the blown body or the weight (GZW, GUB) of a further blown body section is measured, this second weight reading (GBR, GZW, GUB) is compared with a second weight scheduled value, and the screw speed (ns) of the extruder (2) and/or the extrusion die gap (SA) are adjusted for a following blown body in accordance with the second weight deviation for the purpose of equalising the feedback value and the scheduled value, and that for the purpose of correcting the position of a following blown body a new second weight scheduled value is set when the two weight readings (GN, GBR; GN, GZW; GN,GUB) correspond to the scheduled values and the position of the critical hollow body cross-section is no longer within the range of tolerance.

2.  A process according to claim 1, characterised in that the weight (GUB) of the lower waste slug is measured and is compared with a waste slug scheduled weight, and the screw speed (ns) is varied in order to correct the waste slug weight (GUB), wherein an extrusion die gap correction (SA) is first made in order to offset a hollow body net weight deviation (GN) and the screw speed (ns) is not adjusted in accordance with the deviation of the waste slug weight (GUB) from the waste slug scheduled weight until the hollow body net weight (GN) has been corrected.

3.  A process according to claim 1, characterised in that the weight (GUB) of the lower waste slug is measured and a comparison value (GZW) is compared with a comparison weight scheduled value by summation with the measured hollow body net weight (GN), and the screw speed (ns) is adjusted in accordance with the feedback value/scheduled value comparison, wherein the requisite corrections to the extrusion die gap (SA) and the screw speed (ns) are made simultaneously.

4.  A process according to claim 3, characterised in that the gross weight (GBR) of the blown body is approximately calculated from the weight readings (GUB) of the lower waste slug and of the hollow body (GN) and the value thus determined is used as a comparison weight.

5.  A process according to claim 1, characterised in that the gross weight (GBR) of the blown body is measured directly before its subdivision into the hollow body (34) and the waste slugs (35, 36) or is determined by summation of the individual weights measured following the subdivision, that the blown body gross weight (GBR) is compared with a blown body scheduled weight and the screw speed (ns) is adjusted in accordance with the feedback value/scheduled value comparison, wherein the requisite corrections to the extrusion die gap (SA) and the screw speed (ns) are made simultaneously.

6.  A process according to any one of claims 1 to 5, characterised in that the preform (9) is marked externally on at least one critical cross-section region (KP1, KP2) and the position of the mark (27, 28) on the blown body is monitored, and that for the purpose of correcting the position of a following preform (9) a new second weight scheduled value is set when the weight readings correspond to the weight scheduled values and the position of the mark (27, 28) differs from a predetermined scheduled position.

7.  A process according to claim 6, characterised in that the marks (27, 28) are detected by a measuring device (29, 77; 37, 38) and the readings are fed to a comparison and control element (39), and that a new second weight scheduled value is set automatically when the weight readings correspond to the weight scheduled values and the position of the marks (27, 28) differs from the predetermined scheduled position.

8.  A process according to any one of claims 1 to 7, characterised in that a wall thickness measurement (72, 73) of the hollow body is made in the blowing mould (10, 11).

9.  A process according to any one of claims 1 to 8, characterised in that the second weight scheduled value is set so that when there is a plurality of critical hollow body cross-sections (KP1, KP2) the deviations of the hollow body cross-sections from the associated maximum values of functions (23, 24) are of approximately the same magnitude.

10. A process for the extrusion blow moulding of a hollow body from synthetic thermoplastic material, wherein

- a flexible tubular preform (9) is extruded from the extrusion die gap (8) of an extrusion head (1) operating as a reservoir head and in the course of this procedure the extrusion die gap (SA) is varied in accordance with values of the functions of a wall thickness program (13),
- the extruded preform (9) is expanded in a blowing mould (10, 11) to form a blown body,
- the blown body is demoulded from the blowing mould (10, 11) and is divided up at least into the hollow body (63), an upper waste slug (65) and a lower waste slug (66),

wherein the wall thickness program (13) comprises at least one maximum value of a function (23, 24) which is associated with a critical hollow body cross-section (KP1, KP2), characterised in that the weight (GUB) of the lower waste slug (66) or the net weight (GN) of the hollow body (63) is measured, the weight reading is compared with a weight scheduled value and the extrusion die gap (SA) is adjusted in accordance with the weight difference for the purpose of equalising the feedback value and the scheduled value for a following blown body, and that the weight scheduled value can be varied for the purpose of correcting the position of a following blown body and is set so that the critical hollow body cross-section (KP1, KP2) of the blown body occurs at a predetermined location on the blowing mould (10, 11).

11. A process according to claim 10, characterised in that in addition to the first weight measurement (GN) the gross weight (GBR) or the weight of a further blown body section (GUB, GZW) is measured, this second weight reading (GUB, GZW) is compared with a second weight scheduled value and the reservoir stroke (H) is varied for the purpose of equalising the feedback value and the scheduled value for a following blown body.

12. A process according to claim 11, characterised in that the weight of the lower waste slug (GUB) and the hollow body net weight (GN) are measured and these weight readings are used to control the extrusion die gap (SA) and the reservoir stroke (H).

13. A process according to claim 11, characterised in that the weight (GUB) of the lower waste slug and the hollow body net weight (GN) are measured, that one of the weight readings is used to control the extrusion die gap (SA) and the total weight (GZW) from the two weight readings is used to control the reservoir stroke (H).

14. A process according to any one of claims 10 to 13, characterised in that the preform (9) is marked externally on at least one critical cross-section region (KP1, KP2) and the position of the mark (27, 28) is monitored on the blown body (63), and that for the purpose of correcting the position of a following preform (9) in the blowing mould (10, 11) a new weight scheduled value is set when the weight readings correspond to the weight scheduled values and the position of the mark (27, 28) differs from a predetermined scheduled position.

15. A process according to any one of claims 10 to 14, characterised in that the marks (27, 28) are detected by a measuring device (29, 77; 37, 38) and the readings are fed to a comparison and control element (39), and that a new second weight scheduled value is set automatically when the weight readings correspond to the weight scheduled values and the position of the marks (27, 28) differs from the predetermined scheduled position.

16. A process according to any one of claims 11 to 16, characterised in that a wall thickness measurement (72, 73) of the hollow body is made in the blowing mould (10, 11).

17. A process according to any one of claims 11 to 16, characterised in that the second weight scheduled value is set so that when there is a plurality of critical hollow body cross-sections (KP1, KP2) the deviations of the hollow body cross-sections from the associated maximum values of functions (23, 24) are of approximately the same magnitude.

18. A process for the extrusion blow moulding of a hollow body from synthetic thermoplastic material, wherein
- a flexible tubular preform (9) is extruded from the extrusion die gap (8) of an extrusion head (1) by means of a screw extruder (2) and in the course of this procedure the extrusion die gap (8) is varied in accordance with values of the functions of a wall thickness program (13),
- the extruded preform (9) is expanded in a blowing mould (10, 11) to form a blown body,

- the blown body is demoulded from the blowing mould (10, 11) and is divided up at least into the hollow body (34), an upper waste slug (35) and a lower waste slug (36),
- the weight value (GN, GUB) of the subdivided blown body is measured and compared with a scheduled weight, and the weight deviation is determined,

wherein the wall thickness program (13) comprises at least one maximum value of a function (23, 24) which is associated with a critical hollow body cross-section (KP1, KP2), and wherein the extrusion die gap (SA) is correctively adjusted so that the weight (GN, GUB) of a following blown body corresponds to the scheduled weight, characterised in that the preform (9) is marked during the extrusion at two locations associated with control points of the program curve (13), that the distance ($y_2$-$y_1$) between the marks (27, 28) is measured and the deviation from a distance scheduled value is determined, and that the screw speed (ns) of the extruder (2) and/or the extrusion die gap (SA) is adjusted in accordance with this deviation for the purpose of equalising the feedback value and the scheduled value for a following blown body.

19. A process according to claim 18, characterised in that the marks (27, 28) are associated with critical hollow body cross-sections (KP1, KP2).

20. A process according to claims 18 or 19, characterised in that when regulating the distance ($y_2$-$y_1$) in combination with regulating the hollow body net weight (GN), priority is given to the distance regulation as regards control.

21. A device for carrying out the process according to any one of claims 1 to 20, having
a) an extrusion head (1) which has an annular extrusion die gap (8) and which is provided with an extruder connection (2) and with a device (6, 15) for varying the gap width of the extrusion die gap (8),
b) a wall thickness programmer (12) for operating the extrusion die gap adjusting device (6, 15), which comprises a wall thickness program (13) and which effects a variation of the extrusion die gap (8) in accordance with values of functions of the wall thickness program (13),
c) a blowing mould (10, 11) for expanding a flexible tubular preform (9) emerging from the extrusion die gap (8) of the extrusion head (1) to form a blown body,
d) a separating device for severing the blown body, after it has been demoulded from the blowing mould (10, 11), into at least a hollow body (34; 63), an upper waste slug (36; 65) and a lower waste slug (35; 66),
e) at least one balance (40),
f) a comparison and control unit (50) which compares the weight value from the balance (40) with an input weight scheduled value, and
g) an adjusting device (51, 52; 53, 74; 67 to 71) for varying the gap width (SA) of the extrusion die gap (8) and/or the screw speed (ns) of the extruder and/or the reservoir stroke (H) of an extrusion head (1) operating as a reservoir head, in accordance with the feedback/scheduled weight comparison,
wherein the wall thickness program (13) comprises at least one maximum value of a function (23, 24) which is associated with a critical hollow body cross-section (KP1, KP2), characterised by a marking device (75) for applying marks (27, 28) to the preform (9) and by measurement transmitters (29, 77; 37, 38) for detecting the marks (27, 28).

22. A device according to claim 21, characterised in that a measurement transmitter (29) is height-adjustable in the blowing mould (10, 11) for adaptation to the time interval between the time of detecting the mark (27) and the time of closure of the blowing mould (10, 11).

23. A device according to claim 21 or 22, characterised in that measurement transmitters (37, 38) are provided outside the blowing mould (10, 11), by means of which the marks (27, 28) on the blown bodies (34) can be detected.

24. A device for carrying out the process according to any one of claims 1 to 20, having
a) an extrusion head (1) which has an annular extrusion die gap (8) and which is provided with an extruder connection (2) and with a device (6, 15) for varying the gap width of the extrusion die gap (8),

b) a wall thickness programmer (12) for operating the extrusion die gap adjusting device (6, 15), which comprises a wall thickness program (13) and which effects a variation of the extrusion die gap (8) in accordance with values of functions of the wall thickness program (13), wherein the wall thickness program (13) comprises at least one maximum value of a function (23, 24) which is associated with a critical hollow body cross-section (KP1, KP2),

c) a blowing mould (10, 11) for expanding a flexible tubular preform (9) emerging from the extrusion die gap (8) of the extrusion head (1) to form a blown body,

d) a separating device for severing the blown body, after it has been demoulded from the blowing mould (10, 11), into at least a hollow body (34; 63), an upper waste slug (36; 65) and a lower waste slug (35; 66),

e) at least one balance (40),

f) a control device, and

g) an adjusting device (51, 52; 53, 74; 67 to 71) for varying the gap width (SA) of the extrusion die gap (8) and/or the screw speed (ns) of the extruder and/or the reservoir stroke (H) of an extrusion head (1) operating as a reservoir head,

wherein the control device comprises control elements (39, 41, 42, 43) for taking readings, an addition stage (44), and a comparison and control stage (50), which comparison and control stage compares the readings with input scheduled values and which in accordance with feedback value/scheduled value differences sends control signals to the adjusting device (51, 52; 53, 74; 67 to 71) in order to correct the extrusion die gap (SA) and/or the screw speed (ns) and/or the reservoir stroke (H), characterised in that the control device additionally comprises an electronic component (46, 47) for the start-up phase and an electronic component (48, 49) for the production phase, wherein the electronic component (46, 47) which is activated in the start-up phase of the extrusion blow moulding installation effects an immediate readjustment of weight deviations, and wherein the electronic component (48, 49) which is active in the production phase comprises a trend stage (49) for the production phase.

25. A device according to claim 24, characterised in that the electronic component (46, 47) for the start-up phase comprises a time function element (47), and that a switch-over is made to the electronic component for the production phase after a predetermined time interval.

26. A device according to claim 24, characterised in that an automatic switch-over is made from the electronic component (46, 47) for the start-up phase to the electronic component (48, 49) for the production phase when the deviations of the weight readings from the weight scheduled values have reached a predetermined order of magnitude.

**Revendications**

1. Procédé de moulage par extrusion-soufflage d'un corps creux en matière thermoplastique, selon lequel
   - on extrude une préforme en forme de tuyau (9) à l'aide d'une extrudeuse à vis (2), à partir d'une fente (8) et une tête d'extrusion (1), et on modifie la fente (SA) en fonction de valeurs de fonction d'un programme d'épaisseurs de paroi (13),
   - on élargit la préforme extrudée (9) dans un moule de soufflage (10,11) pour former un corps formé par soufflage,
   - on retire le corps formé par soufflage du moule de soufflage (10,11) et on le divise au moins en un corps creux (34), une tête perdue supérieure (36) et une tête perdue inférieure (35),
   - on mesure le poids net (GN) du corps creux (34), et on le compare à un poids de consigne du corps creux et on détermine l'écart de poids net,

le programme d'épaisseurs de paroi (13) possédant au moins une valeur maximale de fonction (23,24), qui est associée à une section transversale critique (KP1,KP2) du corps creux, et la fente (SA) est déplacée de façon corrective de manière que le poids net (GN) d'un corps creux suivant (34) corresponde au poids de consigne du corps creux, caractérisé en ce qu'en plus du poids net (GN) du corps creux, on mesure le poids total (GBR) du corps forme par soufflage ou le poids (GZW, GUB) d'une autre section du corps formé par soufflage, on compare cette seconde valeur de mesure de poids (GBR,GZW,GUB) à une seconde valeur de consigne de poids, et on règle la vitesse de rotation (ns) de la vis de l'extrudeuse (2) et/ou la fente (SA) pour réaliser la compensation valeur réelle/valeur de consigne dans le cas d'un corps ultérieur formé par soufflage, en fonction de la seconde différence de poids et que pour réaliser la correction de position d'un corps ultérieur formé par soufflage, on règle une seconde valeur de consigne du poids, lorsque les deux valeurs de mesure de poids (GN, GBR ou

EP 0 345 474 B1

GN, GZW ou GN, GUB) correspondent aux valeurs de consigne et que la position de la section transversale critique du corps creux n'est plus située dans la plage de tolérances.

2. Procédé selon la revendication 1, caractérisé en ce que l'on mesure le poids (GUB) de la tête perdue inférieure, qu'on le compare au poids de consigne de la tête perdue et on modifie la vitesse de rotation (ns) de la vis pour corriger le poids (GUB) de la tête perdue, auquel cas on exécute tout d'abord une correction (SA) de la fente pour compenser un écart (GN) du poids net du corps creux et c'est seulement, une fois la correction du poids net (GN) du corps creux exécutée, que l'on règle la vitesse de rotation (ns) de la vis en fonction de l'écart entre le poids (GUB) de la tête perdue et le poids de consigne de la tête perdue.

3. Procédé selon la revendication 1, caractérisé en ce qu'on mesure le poids (GUB) de la tête perdue inférieure et qu'on le compare par formation de la somme avec le poids net mesuré (GN) du corps creux, une valeur de comparaison (GZW) à une valeur de consigne du poids de comparaison et qu'on modifie la vitesse de rotation (ns) de la vis en fonction de la comparaison valeur réelle/valeur de consigne, les corrections nécessaires de la fente (SA) et de la vitesse de rotation (ns) de la vis étant exécutées simultanément.

4. Procédé selon la revendication 3, caractérisé en ce qu'on calcule approximativement le poids total (GBR) du corps obtenu formé par soufflage, à partir des valeurs de mesure de poids (GUB) de la tête perdue inférieure et qu'on utilise la valeur ainsi déterminée en tant que poids de comparaison.

5. Procédé selon la revendication 1, caractérisé en ce qu'on mesure directement le poids total (GBR) du corps formé par soufflage avant la division dans le corps creux (34), ainsi que les têtes perdues (35,36) ou qu'on détermine par formation de la somme des poids individuels mesurés à la suite de cette division, que l'on compare le poids total (GBR) du corps formé par soufflage à un poids de consigne du corps formé par soufflage et qu'on règle la vitesse de rotation (ns) de la vis en fonction de la comparaison valeur réelle/valeur de consigne, les corrections nécessaires de la fente (SA) et de la vitesse de rotation (ns) de la vis étant exécutées simultanément.

6. Procédé selon l'une des revendications 1 à 5, caractérisé en ce que la préforme (9) est marquée sur sa face extérieure dans au moins une zone critique (KP1, KP2) de la section transversale et marquée sur sa face extérieure et que la position de la marque (27,28) sur le corps formé par soufflage est contrôlée et que pour réaliser la correction de position d'une ébauche suivante (9), on règle une nouvelle seconde valeur de consigne du poids lorsque les valeurs de mesure du poids coïncident avec les valeurs de consigne du poids et que la position de la marque (27,28) s'écarte d'une position de consigne prédéterminée.

7. Procédé selon la revendication 6, caractérisé en ce que les marques (27,28) sont détectées par un dispositif de mesure (29,77;37,38) et que les valeurs de mesure sont envoyées à un circuit de comparaison de régulation (39), et qu'une nouvelle seconde valeur de consigne de poids est réglée automatiquement lorsque les valeurs de mesure de poids coïncident avec les valeurs de consigne de poids et que la position des marques (27,28) diffère de la position de consigne prédéterminée.

8. Procédé selon l'une des revendications 1 à 7, caractérisé en ce qu'une mesure d'épaisseur de paroi (72,73) du corps formé par soufflage est exécutée dans le moule de soufflage (10,11).

9. Procédé selon l'une des revendications 1 à 8, caractérisé en ce qu'on règle la seconde valeur de consigne de poids de telle sorte que, dans le cas de plusieurs sections transversales critiques (KP1,KP2) du corps creux, les écarts des sections transversales du corps creux par rapport aux valeurs maximales associées de fonction (23,24) sont approximativement égaux.

10. Procédé pour former par extrusion - soufflage un corps creux réalisé en une matière thermoplastique, selon lequel
    - on extrude une préforme en forme de tuyau (9) à partir d'une fente (8) et une tête d'extrusion (1), et on modifie la fente (SA) en fonction de valeurs de fonction d'un programme d'épaisseurs de paroi (13),

- on élargit la préforme extrudée (9) dans un moule de soufflage (10,11) pour former un corps formé par soufflage,
- on retire le corps formé par soufflage du moule de soufflage (10,11) et on le divise au moins en un corps creux (63), une tête perdue supérieure (65) et une tête perdue inférieure (66),

et selon lequel le programme d'épaisseurs de paroi (13) possède au moins une valeur maximale de fonction (23,24), qui est associée à une section transversale critique (KP1, KP2) du corps creux, caractérisé en ce que l'on mesure le poids (GUB) de la tête perdue inférieure (66) et le poids net (GN) du corps creux (63), que l'on compare la valeur de mesure de poids à une valeur de consigne du poids et qu'on règle la fente (SA) en fonction de la différence de poids pour réaliser une compensation valeur réelle/valeur de consigne pour un corps suivant formé par soufflage, ou que l'on peut modifier la valeur de consigne du poids pour effectuer la correction de position d'un corps suivant formé par soufflage et qu'on règle cette valeur de telle sorte que la section transversale critique (KP1,KP2) du corps creux du corps formé par soufflage vient se placer en un emplacement prédéterminé du moule de soufflage (10,11).

11. Procédé selon la revendication 10, caractérisé en ce qu'en plus de la première mesure de poids (GN), on mesure le poids total (GBR) ou le poids d'une autre section (GUB,GZW) du corps formé par soufflage, que l'on compare cette seconde valeur de mesure de poids (GUB, GZW) à une seconde valeur de consigne de poids et qu'on modifie la course d'accumulation (H) pour la compensation valeur réelle/valeur de consigne, pour un corps suivant formé par soufflage.

12. Procédé selon la revendication 11, caractérisé en ce qu'on mesure le poids de la tête perdue inférieure (GUB) et le poids net (GN) du corps creux et qu'on utilise ces valeurs de mesure de poids pour commander la fente (SA) et la course d'accumulation (H).

13. Procédé selon la revendication 11, caractérisé en ce qu'on mesure le poids (GUB) de la tête perdue inférieure et le poids net (GN) du corps creux et qu'on utilise l'une des valeurs de mesure de poids pour commander la fente (SA) et le poids somme (GZW) formé à partir des deux valeurs de poids, pour commander la course d'accumulation (H).

14. Procédé selon l'une des revendications 10 à 13, caractérisé en ce qu'on marque sur sa face extérieure la préforme (9) dans au moins une zone critique (KP1, KP2) de la section transversale et on contrôle la position de marque (27,28) sur le corps formé par soufflage (63) et que pour réaliser la correction de position d'une ébauche suivante (9) dans dans le moule à soufflage (10,11), on règle une nouvelle seconde valeur de consigne du poids lorsque quand les valeurs de mesure du poids coïncident avec les valeurs réelles/valeurs de consigne du poids, la position de la marque (27,28) s'écarte d'une position de consigne prédéterminée.

15. Procédé selon l'une des revendications 10 à 14, caractérisé en ce que les marques (27,28) sont détectées par un dispositif de mesure (29,77;37,38) et que les valeurs de mesure sont envoyées à un circuit de comparaison et de régulation (39), et qu'une nouvelle seconde valeur de consigne de poids est réglée automatiquement lorsque les valeurs de mesure de poids coïncident avec les valeurs de consigne de poids et que la position des marques (27,28) diffère de la position de consigne prédéterminée.

16. Procédé selon l'une des revendications 11 à 16, caractérisé en ce qu'on exécute une mesure d'épaisseur de paroi (72,73) du corps creux dans le moule de soufflage (10,11).

17. Procédé selon l'une des revendications 11 à 16, caractérisé en ce qu'on règle la seconde valeur de consigne de poids de telle sorte que, dans le cas de plusieurs sections transversales critiques (KP1,KP2) du corps creux, les écarts des sections transversales du corps creux par rapport aux valeurs maximales associées de fonction (23,24) sont approximativement égaux.

18. Procédé de formage par extrusion - soufflage d'un corps creux réalisé en une matière thermoplastique, selon lequel
- on extrude une préforme en forme de tuyau (9) à l'aide d'une extrudeuse à vis (2) à partir de la fente (SA) d'une tête d'extrusion (1) et on modifie la fente (8) en fonction de valeurs de fonction d'un programme d'épaisseurs de paroi (13),

- on élargit la préforme extrudée (9) dans un moule de soufflage (10,11) pour former un corps formé par soufflage,
- on ressort le corps formé par soufflage hors du moule de soufflage (10,11) et on le divise au moins en deux corps creux (34), une tête perdue supérieure (35) et une tête perdue inférieure (36),
- on mesure une valeur de poids (GN, GUB) du corps formé par soufflage, divisé, on la compare à un poids de consigne et on détermine l'écart de poids,

selon lequel le programme d'épaisseurs de paroi (13) comporte au moins une valeur maximale de fonction (23,24), qui est associée à une section transversale critique (KP1, KP2) du corps creux, et selon lequel on règle la fente (SA) de façon corrective de manière que le poids (GN, GUB) d'un corps suivant formé par soufflage corresponde au poids de consigne, caractérisé en ce que l'on marque la préforme (9) lors de l'extrusion, en deux emplacements associés à des points de contrôle de la courbe de programme (13), qu'on mesure la distance $(y_2-y_1)$ entre les marques (27,28) et qu'on détermine l'écart par rapport à une valeur de consigne de distance, et qu'on règle la vitesse de rotation (ns) de la vis de l'extrudeuse (2) et/ou la fente (SA) pour la compensation valeur réelle/valeur de consigne, pour un corps suivant formé par soufflage, en fonction de cet écart.

19. Procédé suivant la revendication 18, caractérisé en ce que les marques (27,28) sont associées à des sections transversales critiques (KP1,KP2) du corps creux.

20. Procédé selon la revendication 18 ou 19, caractérisé en ce que lors de la régulation de l'écart $(y_2-y_1)$ en liaison avec la régulation du poids net (GN) du corps creux, on donne, du point de vue de la commande, la priorité à la régulation de l'écart.

21. Dispositif pour la mise en oeuvre du procédé selon l'une des revendications 1 à 20, comportant
   a) une tête d'extrusion (1), qui possède une fente annulaire (8) et est équipée d'un raccord d'extrudeuse (2) ainsi que d'un dispositif (6,15) pour modifier la largeur de la fente (8),
   b) un dispositif de programmation d'épaisseur de paroi (12) pour actionner le dispositif (6,15) de réglage de la fente et qui comporte un programme d'épaisseurs de paroi (13) et exécute, en fonction de valeurs de fonction du programme d'épaisseurs de paroi (13), une modification de la largeur de la fente (8),
   c) un moule de soufflage (10,11) servant à élargir une préforme en forme de tuyau (9), qui sort de la fente (8) de la tête d'extrusion (1), pour former un corps formé par soufflage,
   d) un dispositif de séparation pour séparer le corps formé par soufflage, après démoulage du moule de soufflage (10,11), en au moins un corps creux (34; 63), une tête perdue supérieure (36;65) ainsi qu'une tête perdue inférieure (34;66),
   e) au moins une bascule (40);
   f) une unité de comparaison et de régulation (50), qui compare la valeur de mesure de poids fournie par la bascule (40) à une valeur de consigne de poids introduite, et
   g) un dispositif de réglage (51,52;53;74;67 à 71) servant à modifier la largeur (SA) de la fente (8) et/ou la vitesse de rotation (ns) de la vis de l'extrudeuse et/ou la course d'accumulation (H) d'une tête d'extrusion (1) qui travaille lors du fonctionnement de la tête d'accumulation, en fonction de la comparaison valeur réelle/valeur de consigne,

le programme d'épaisseurs de paroi (13) possède au moins une valeur maximale de fonction (23,24), qui est associée à une section transversale critique (KP1,KP2) du corps creux, caractérisé par un dispositif de marquage (64) servant à apposer des marques (27,28) sur la préforme (9), et par des générateurs de mesure (29,77;37,38) pour détecter les marques (27,28).

22. Dispositif suivant la revendication 21, caractérisé par le fait qu'un générateur de mesure (29) situé dans le moule de soufflage (10,11) est réglable en hauteur pour permettre une adaptation à l'intervalle de temps s'écoulant entre l'instant de la détection de la marque (27) et l'instant de la fermeture du moule de soufflage (10,11).

23. Dispositif selon la revendication 21 ou 22, caractérisé en ce qu'à l'extérieur du moule de soufflage (10,11) sont disposés des générateurs de mesure (37,38), à l'aide desquels les marques (27,28) peuvent être détectées sur les corps formés par soufflage (34).

24. Dispositif pour la mise en oeuvre du procédé selon l'une des revendications 1 à 20, comportant

a) une tête d'extrusion (1), qui possède une fente annulaire (8) et est équipée d'un raccord d'extrudeuse (2) ainsi que d'un dispositif (6,15) pour modifier la largeur de la fente (8),

b) un dispositif de programmation d'épaisseur de paroi (12) pour actionner le dispositif (6,15) de réglage de la fente et qui comporte un programme d'épaisseurs de paroi (13) et exécute, en fonction de valeurs de fonction du programme d'épaisseurs de paroi (13), une modification de la largeur de la fente (8), le programme d'épaisseurs de paroi (13) comportant au moins une valeur maximale de fonction (23,24), qui est associée à une section transversale critique (KP1,KP2) du corps creux,

c) un moule de soufflage (10,11) servant à élargir une préforme en forme de tuyau (9), qui sort de la fente (8) de la tête d'extrusion (1), pour former un corps formé par soufflage,

d) un dispositif de séparation pour séparer le corps formé par soufflage, après démoulage du moule de soufflage (10,11), en au moins un corps creux (34; 63), une tête perdue supérieure (36;65) ainsi qu'une tête perdue inférieure (34;66),

e) au moins une bascule (40);

f) un dispositif de régulation, et

g) un dispositif de réglage (51,52;53,74;67 à 71) pour modifier la largeur (SA) de la fente (8) et/ou la vitesse de rotation (ns) de la vis de l'extrudeuse et/ou la course d'accumulation (H) d'une tête d'extrusion (1) qui travaille lors du fonctionnement de la tête d'accumulation,

et dans lequel le dispositif de régulation comporte des organes de réglage (39,41,42,43) pour enregistrer les valeurs de mesure, un étage additionneur (44) ainsi qu'un étage de comparaison et de régulation (50), lequel étage de comparaison et de régulation compare entre elles les valeurs de mesure et les valeurs de consigne introduites et, en fonction d'écarts valeur réelle/valeur de consigne, envoie des signaux de commande au dispositif de réglage (51,52;53,74;67,61) pour la correction de la fente (SA) et/ou de la vitesse de rotation (ns) de la vis et/ou de la course d'accumulation (H), caractérisé en ce que le dispositif de régulation comporte en outre un module électronique (46,47) pour la phase de démarrage ainsi qu'un module électronique (48,49) pour la phase de production, le module électronique (46,47), qui est activé pendant la phase de démarrage de l'installation de moule d'extrusion - soufflage déclenche, pour la phase de démarrage, une régulation immédiate d'asservissement d'écarts de poids, et le module électronique (48,49), actif pendant la phase de production suivante, comprenant, pour la phase de production, un échelon de tendance (49).

25. Dispositif selon la revendication 24, caractérisé en ce que le module électronique (46,47) comporte, pour la phase de démarrage, une minuterie (47) et qu'après l'écoulement d'un intervalle de temps prédéterminé, une commutation a été exécutée sur le module électronique pour la phase de production.

26. Dispositif selon la revendication 24, caractérisé en ce qu'une commutation automatique est exécutée depuis le module électronique (46,47) pour la phase de démarrage sur le module électronique (48,49) pour la phase de production lorsque les écarts entre les valeurs de mesure de poids et les valeurs de consigne de poids ont atteint un ordre de grandeur prédéterminé.

FIG.1

EP 0 345 474 B1

FIG. 3

FIG. 2

FIG.4

FIG.5

FIG.6

FIG.7

FIG. 8

Stützluft normal

Stützluft wenig

Stützluft viel

schiefer Schlauchlauf

unsauberer Schnitt

Bereich des Hohlkörpers ohne Butzen (immer konstant)

Beginn unterer Butzen

Meßhöhe Fotozelle

EP 0 345 474 B1

Sollgewicht (g)

Förderleistung konstant
Schwellung

Schwellung konstant
Förderleistung

| | V1 | | V2 > | | V3 < | | V4 > | | V5 < |
|---|---|---|---|---|---|---|---|---|---|---|
| 60 | | 63 | | 57 | | 60 | | 60 | |
| 360 | | 378 | | 342 | | 360 | | 360 | |
| 60 | | 39 | | 81 | | 81 | | 39 | |

480

480
SA <

480
SA >

501
ns <

459
ns >

## FIG.9

> Schwellung >
> Förderleistung <

< Schwellung <
< Förderleistung >

| | | V6 | | V7 | | V8 | | V9 |
|---|---|---|---|---|---|---|---|---|
| oberer Butzen ≙ 3 WDP | 63 | | 63 | | 57 | | 57 | |
| Hohlkörper netto ≙ 18 WDP | 378 | | 378 | | 342 | | 342 | |
| unterer Butzen ≙ 3 WDP | 60 | | 18 | | 60 | | 102 | |

Bruttogewicht ≙ 24 WDP
erforderliche Änderung

501
SA <
ns <

438
SA <
ns >

459
SA >
ns >

501
SA >
ns <

FIG.10